# EUROPEAN PATENT APPLICATION

(11) **EP 4 645 959 A1**
(43) Date of publication of application: **05.11.2025**
(21) Application number: 24747484.4
(22) Date of filing: 26.01.2024
(51) Int. Cl.: H04W 40/22, H04W 76/11, H04W 76/14, H04W 88/04, H04W 92/10, H04W 92/18

(54) **METHOD AND DEVICE FOR MANAGING ADAPTATION LAYER OF RELAY BETWEEN TERMINALS IN WIRELESS COMMUNICATION SYSTEM**

(30) Priority: 27.01.2023 KR 20230011257
(71) Applicant: Samsung Electronics Co., Ltd., Suwon-si, Gyeonggi-do 16677 (KR)
(72) Inventor: YU, Jeongseok, Suwon-si Gyeonggi-do 16677 (KR); KANG, Hyunjeong, Suwon-si Gyeonggi-do 16677 (KR)
(74) Representative: Nederlandsch Octrooibureau
(86) International application number: PCT/KR2024/001285
(87) International publication number: WO 2024/158251

(57) **Abstract**

The present disclosure relates to a 5G or 6G communication system for supporting a higher data transmission rate. This method performed by a relay UE for user equipment (UE)-to-UE (U2U) sidelink communication in a wireless communication system, comprises acquiring configuration information on a sidelink relay adaption protocol (SRAP) and receiving, from a first UE, an SRAP protocol data unit (PDU) by using at least one of a plurality of sidelink signaling radio bearers (SL SRBs) based on the configuration information, wherein the SRAP PDU is received by the relay UE using a radio link control (RLC) channel common to the plurality of SL SRBs.

## Description

### [Technical Field]

The disclosure relates generally to a wireless communication system and, more particularly, to a method and a device for managing an adaptation layer for terminal relay in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and a device for managing an adaptation layer for terminal relay in a wireless communication system so as to provide services using the terminal relay.

The technical subjects pursued in the disclosure may not be limited to the above-mentioned technical subjects, and other technical subjects which are not mentioned herein may be clearly understood from the following descriptions by those skilled in the art to which the disclosure pertains.

### [Solution to Problem]

A method performed by a relay user equipment (UE) for UE-to-UE (U2U) sidelink communication in a wireless communication system may include acquiring configuration information on a sidelink relay adaption protocol (SRAP); and based on the configuration information, receiving an SRAP protocol data unit (PDU) from a first UE by using at least one of a plurality of sidelink signaling radio bearers (SL SRBs), wherein the SRAP PDU is received by the relay UE using a radio link control (RLC) channel common to the plurality of SL SRBs.

A relay user equipment (UE) for UE-to-UE (U2U) sidelink communication in a wireless communication system may include a transceiver and a controller coupled with the transceiver, wherein the controller is configured to acquire configuration information on a sidelink relay adaption protocol (SRAP); and based on the configuration information, receive an SRAP protocol data unit (PDU) from a first UE by using at least one of a plurality of sidelink signaling radio bearers (SL SRBs), wherein the SRAP PDU is received by the relay UE using a radio link control (RLC) channel common to the plurality of SL SRBs.

A method performed by a first user equipment (UE) in a wireless communication system may include acquiring configuration information on a sidelink relay adaption protocol (SRAP); and based on the configuration information, transmitting, to a relay UE for UE-to-UE (U2U) sidelink communication, an SRAP protocol data unit (PDU) by using at least one of a plurality of sidelink signaling radio bearers (SL SRBs), wherein the SRAP PDU is transmitted to the relay UE by using a radio link control (RLC) channel common to the plurality of SL SRBs.

A first user equipment (UE) in a wireless communication system may include a transceiver and a controller coupled with the transceiver, wherein the controller is configured to acquire configuration information on a sidelink relay adaption protocol (SRAP); and based on the configuration information, transmit, to a relay UE for UE-to-UE (U2U) sidelink communication, an SRAP protocol data unit (PDU) by using at least one of a plurality of sidelink signaling radio bearers (SL SRBs), wherein the SRAP PDU is transmitted to the relay UE by using a radio link control (RLC) channel common to the plurality of SL SRBs.

### [Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a flowchart of a procedure for establishing a PC5 unicast link for direct communication between UEs according to an embodiment of the disclosure.
FIG. 2 is a diagram illustrating a wireless protocol structure of a UE-to-network (U2N) relay according to an embodiment of the disclosure.
FIG. 3 is a flowchart of a procedure in which a base station configures an adaptation layer of a UE-to-network (U2N) relay according to an embodiment of the disclosure.
FIG. 4 is a diagram illustrating a wireless protocol structure of a UE-to-UE (U2U) relay according to an embodiment of the disclosure.
FIG. 5 is a flowchart of a procedure for establishing a PC5 unicast link of a UE-to-UE (U2U) relay according to an embodiment of the disclosure.
FIG. 6 is a flowchart of a procedure for acquiring a local identifier (local identity) of a UE-to-UE (U2U) relay from a base station according to an embodiment of the disclosure.
FIG. 7 is a flowchart of a procedure for configuring, with a specified configuration, an adaptation layer for relaying an end-to-end (E2E) sidelink signaling radio bearer (SL-SRB) of a UE-to-UE (U2U) relay according to an embodiment of the disclosure.
FIG. 8 is a flowchart of a procedure for configuring, with a dedicated configuration, an adaptation layer for relaying an end-to-end (E2E) sidelink signaling radio bearer (SL-SRB) of a UE-to-UE (U2U) relay according to an embodiment of the disclosure.
FIG. 9 is a flowchart of a procedure for establishing an end-to-end (E2E) sidelink data radio bearer (SL-DRB) of a UE-to-UE (U2U) relay and configuring an adaptation layer for relaying the sidelink data radio bearer according to an embodiment of the disclosure.
FIG. 10 is a block diagram illustrating an internal structure of a base station according to an embodiment of the disclosure.
FIG. 11 is a block diagram illustrating a structure of a UE according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

5G mobile communication technologies define broad frequency bands such that high transmission rates and new services are possible, and can be implemented not only in "Sub 6GHz" bands such as 3.5GHz, but also in "Above 6GHz" bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Hereinafter, the disclosure relates to a method and a device for managing an adaptation layer (sidelink relay adaptation layer (SRAP)) for inter-UE relay. Specifically, when a UE supporting inter-UE relay is to configure inter-UE relay via a target UE and a relay UE, it may be necessary to distinguish between data transmitted by a source UE to the target UE and data transmitted to the relay UE. For example, data transmitted to the target UE and data transmitted to the relay UE may be distinguished by a PC5 relay RLC channel corresponding to a sidelink radio bearers (SLRB) determined by an adaptation layer of each UE. The source UE may configure an adaptation layer to determine a PC5 relay RLC channel through which SL-SRB or SL-DRB to be transmitted to the target end is transmitted to the relay UE. The source UE may transmit configuration information on the adaptation layer to the relay UE.

The relay UE may configure an adaptation layer to determine a PC5 relay RLC channel through which the SL-SRB to be transmitted to the target UE by the source UE is transmitted to the relay UE. The relay UE may transmit the configuration information on the adaptation layer to the source UE. The relay UE may configure an adaptation layer to determine a PC5 relay RLC channel through which the SL-SRB or SL-DRB to be transmitted from the source UE to the target UE is transmitted to the target UE. The configuration information on the adaptation layer may be transmitted to the target UE.

The relay UE may identify or determine the target UE via the PC5 relay RLC channel and the adaptation layer configuration information for the data received from the source UE, and determine the PC5 relay RLC channel for transmission to the target UE. The target UE may identify or determine the source UE via the PC5 relay RLC channel and the adaptation layer configuration information for the data received from the relay UE, and identify or determine a corresponding SLRB.

According to an embodiment of the disclosure, a source UE may configure an adaptation layer for transmitting a message by using a PC5 relay radio link control (RLC) channel, the message belonging to a sidelink signaling radio bearer (SL-SRB) or sidelink data radio bearer (SL-DRB) to be transmitted to a target UE via a relay UE, and may transmit configuration information of the adaptation layer to the relay UE. Alternatively, the relay UE may configure an adaptation layer for relaying, to the target UE, the SL-SRB transmitted by the source UE, and may transmit configuration information of the adaptation layer to the source UE. The relay UE may transmit, to the target UE, the configuration information of the adaptation layer configured by the source UE or the relay UE. When the target UE receives data from the relay UE, the target UE may determine, based on the adaptation layer, that the data has been relayed via the relay UE from the source UE, and may determine which SL-SRB or SL-DRB the data belongs to. For a UE relay service, each UE may support UE relay via configuration of an adaptation layer and transmission of configuration information.

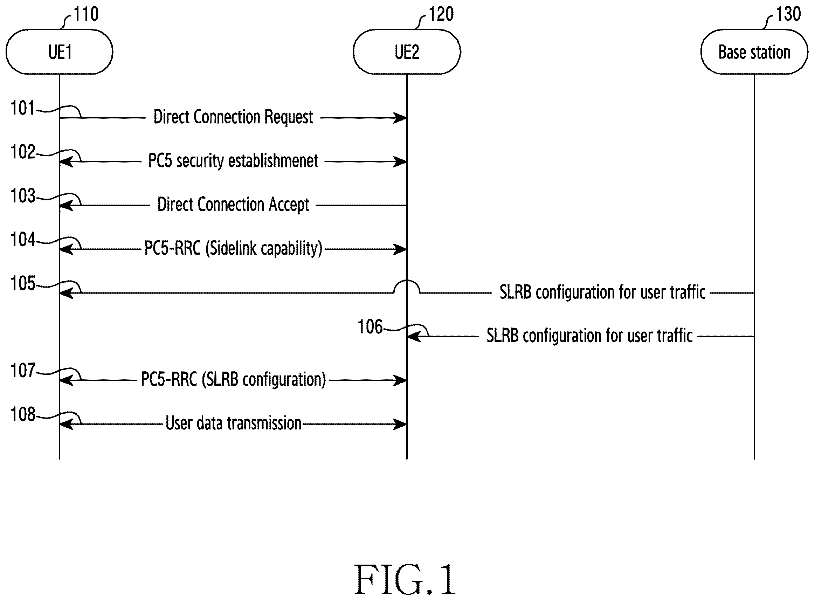

FIG. 1 is a flowchart of a procedure for establishing a PC5 unicast link for direct communication between UEs according to an embodiment of the disclosure.

Referring to FIG. 1, UE1 110 and UE2 120 according to an embodiment may establish a direct connection via a sidelink interface. For example, UE1 110 and UE2 120 may be configured to be directly connected via a sidelink interface. UE1 110 and UE2 120 may be referred to as UEs capable of transmitting and/or receiving data and signaling via a direct connection.

According to an embodiment, in operation 101, UE1 110 may transmit a direct communication request message to establish a PC5 unicast link to UE2 120. In case that UE2 120 receives the direct communication request message of operation 101, UE2 120 may perform PC5 security configuration, such as mutual authentication and encryption key configuration, for the PC5 unicast link to UE1 110 in operation 102. For example, UE2 120 may initiate or perform PC5 security configuration in operation 102 in response to receiving the direct communication request message.

According to an embodiment, if it is determined that mutual authentication, encryption key configuration, etc. for the direct connection establishment between UE1 110 and UE2 120 have been normally performed, UE2 120 may transmit a direct communication acceptance message to UE1 110 in operation 103, and the PC5 unicast link establishment may be completed. UE1 110 and UE2 120 may perform direct communication configuration via PC5-radio resource control (RRC).

According to an embodiment, signaling (message or information) for exchanging sidelink UE capability information may be transmitted in PC5-RRC layers of UE1 110 and UE2 120 in operation 104. In operation 107, signaling for exchanging configuration information for SLRB for data transmission and reception may be transmitted in the PC5-RRC layers of UE1 110 and UE2 120. SL-SRB for transmitting signaling exchanged between UE1 110 and UE2 120 in operation(s) 101, 102, 103, 106, and/or 107 may correspond to SL-SRB0, SL-SRB1, SL-SRB2, or SL-SRB3. Configuration information for SL-SRB0, SL-SRB1, SL-SRB2, and/or SL-SRB3 may be stored as a specified configuration in UE1 110 and UE2 120. The specified configuration information of the SL-SRBs may be as illustrated in [Tables 1-1, 1-2, 1-3, and 1-4]. For example, the specified configuration information of the SL-SRBs may be [Table 1-1], [Table 1-2], [Table 1-3], and/or [Table 1-4].

**[Table 1-1]**

| 9.1.1.4 SCCH configuration | | | |
|---|---|---|---|
| Parameters that are specified for unicast of NR sidelink communication, which is used for the sidelink signaling radio bearer of PC5-RRC message. The SL-SRB using this SCCH configuration is named as SL-SRB3. | | | |
| **Name** | **Value** | **Semantics description** | **Ver** |
| PDCP configuration | | | |
| *>t-Reordering* | Undefined | Selected by the receiving UE, up to UE implementation | |
| *>pdcp-SN-Size* | 12 | | |
| RLC configuration | | AM RLC | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>logicalChannelIdentity* | 3 | | |
| MAC configuration | | | |
| *>priority* | 1 | | |
| *>prioritisedBitRate* | infinity | | |
| *>logicalChannelGroup* | 0 | | |
| *>schedulingRequestId* | 0 | The scheduling request configuration with this value is applicable for this SCCH if configured by the network. | |
| *>sl-HARQ-FeedbackEnabled* | Undefined | Selected by the transmitting UE, up to UE implementation | |

**[Table 1-2]**

| Parameters that are specified of NR sidelink communication, which is used for the sidelink signaling radio bearer of unprotected PC5-S message (e.g., Direct Link Establishment Request, TS 24.587 [57] or Prose Direct Link Establishment Request, TS 24.554 [72]). The SL-SRB using this SCCH configuration is named as SL-SRB0. | | | |
|---|---|---|---|
| **Name** | **Value** | **Semantics description** | **Ver** |
| PDCP configuration | | | |
| *>t-Reordering* | Undefined | Selected by the receiving UE, up to UE implementation | |
| *>pdcp-SN-Size* | 12 | | |
| RLC configuration | | UM RLC | |
| *>sn-FieldLength* | 6 | | |
| *>t-Reassembly* | Undefined | Selected by the receiving UE, up to UE implementation | |
| *>logicalChannelldentity* | 0 | | |
| MAC configuration | | | |
| *>priority* | 1 | | |
| *>prioritisedBitRate* | infinity | | |
| *>logicalChannelGroup* | 0 | | |
| *>schedulingRequestId* | 0 | The scheduling request configuration with this value is applicable for this SCCH if configured by the network. | |
| *>sl-HARQ-FeedbackEnabled* | Undefined | Selected by the transmitting UE, up to UE implementation | |

**[Table 1-3]**

| Parameters that are specified for unicast of NR sidelink communication, which is used for the sidelink signaling radio bearer of PC5-S message establishing PC5-S security (e.g., Direct Link Security Mode Command and Direct Link Security | | | |
|---|---|---|---|
| Mode Complete, TS 24.587 [57] or ProSe Direct Link Security Mode Command and ProSe Direct Link Security Mode Complete, TS 24.554 [72]). The SL-SRB using this SCCH configuration is named as SL-SRB1. | | | |
| **Name** | **Value** | **Semantics description** | **Ver** |
| PDCP configuration | | | |
| *>t-Reordering* | Undefined | Selected by the receiving UE, up to UE implementation | |
| *>pdcp-SN-Size* | 12 | | |
| RLC configuration | | AM RLC | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>logicalChannelldentity* | 1 | | |
| MAC configuration | | | |
| >*priority* | 1 1 | | |
| *>prioritisedBitRate* | infinity | | |
| *>logicalChannelGroup* | 0 | | |
| *>schedulingRequestId* | 0 | The scheduling request configuration with this value is applicable for this SCCH if configured by the network. | |
| *>sl-HARQ-FeedbackEnabled* | Undefined | Selected by the transmitting UE, up to UE implementation | |

**[Table 1-4]**

| Parameters that are specified for unicast of NR sidelink communication, | | | |
|---|---|---|---|
| which is used for the sidelink signaling radio bearer of protected PC5-S message except Direct Link Security Mode Complete, TS 24.587 [57] or Prose Direct Link Security Mode Complete, TS 24.554 [72]. The SL-SRB using this SCCH configuration is named as SL-SRB2. | | | |
| **Name** | **Value** | **Semantics description** | **Ver** |
| PDCP configuration | | | |
| *>t-Reordering* | Undefined | Selected by the receiving UE, up to UE implementation | |
| *>pdcp-SN-Size* | 12 | | |
| RLC configuration | | AM RLC | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>logicalChannelldentity* | 2 | | |
| MAC configuration | | | |
| *>priority* | 1 | | |
| *>prioritisedBitRate* | infinity | | |
| *>logicalChannelGroup* | 0 | | |
| *>schedulingRequestId* | 0 | The scheduling request configuration with this value is applicable for this SCCH if configured by the network. | |
| *>sl-HARQ-FeedbackEnabled* | Undefined | Selected by the transmitting UE, up to UE implementation | |

Three examples of a method by which UE1 110 and UE2 120 acquire configuration information for a sidelink data radio bearer (SL-DRB) corresponding to data in operation 107 are shown in [Table 2].

**[Table 2]**

| |
|---|
| (1) If UE1 110 or UE2 120 is in an RRC_CONNECTED state in which an RRC connection to a base station has been established, UE1 110 and/or UE2 120 may acquire configuration information for SL-DRB from the base station via a dedicated RRC message. UE1 110 or UE2 120 may provide the base station with information, such as a ProSe quality of service (QoS) indicator (PQI) and a QoS profile for a QoS flow of transmission data, and the base station may provide (e.g., operations 105 and 106) UE1 110 or UE2 120 with SLRB configuration information based on the PQI, QoS profile, etc. for the QoS flow of transmission data. |
| (2) If UE1 110 or UE2 120 is in an RRC_IDLE state or RRC_INACTIVE state in which an RRC connection to a base station has not been established, configuration information for SL-DRB may be acquired from the base station via a system information block (SIB) message. The SIB message configured and transmitted by the base station may include SLRB configuration information corresponding to a PQI and/or a QoS profile. UE1 110 and/or UE2 120 may acquire (e.g., operations 105 and 106), from the SIB message, SLRB configuration information corresponding to a ProSe QoS indicator (PQI) and/or QoS profile for a QoS flow of transmission data. |
| (3) If UE1 110 or UE2 120 is in an out-of-coverage state, UE1 110 or UE2 120 may acquire configuration information for pre-configured SL-DRB. Pre-configuration information may include SLRB configuration information corresponding to a ProSe QoS indicator (PQI) and a QoS profile. UE1 110 and/or UE2 120 may acquire, from the pre-configuration information, SLRB configuration information corresponding to a PQI and/or QoS profile for a QoS flow of transmission data. |

In case that UE1 110 or UE2 120 is a transmission (Tx) UE, UE1 110 or UE2 120 may acquire, based on one of the three methods in [Table 2], configuration information on SLRB for a QoS flow corresponding to data to be transmitted. UE1 110 or UE2 120 may transfer SLRB configuration information for a QoS flow to UE2 120 or UE1 110 corresponding to a reception (Rx) UE via PC5-RRC layer signaling in operation 107. For example, in case that UE1 110 is a transmission UE, UE2 120 may be a reception UE, and in case that UE2 120 is a transmission UE, UE1 110 may be a reception UE. In the disclosure, a transmission UE and a reception UE may be respectively referred to as a UE configured to transmit data and a UE configured to receive data at a designated time. Accordingly, the transmission UE may also be configured to receive data, and the reception UE may also be configured to transmit data.

SLRB configuration information to be applied when the reception UE receives a QoS flow of data may be determined by the reception UE itself. UE1 110 and UE2 120 may apply the SLRB configuration information for data, which has been configured in operation 107, and transmit and/or receive data in operation 108.

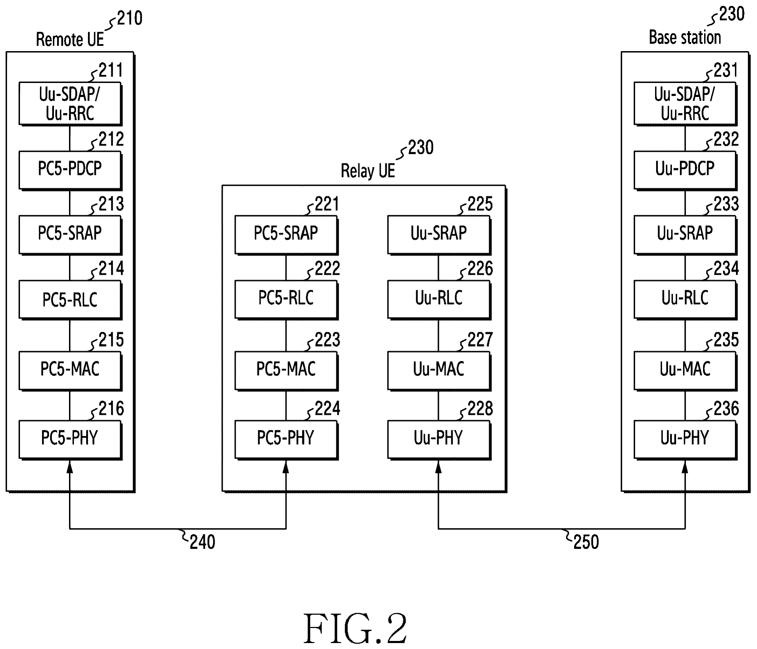

FIG. 2 is a diagram illustrating a wireless protocol structure of a UE-to-network (U2N) relay according to an embodiment of the disclosure.

Referring to FIG. 2, wireless protocols of U2N relay may be composed of Uu-SDAP or Uu-RRC 211, packet data convergence protocol (Uu-PDCP) 212, PC5-SRAP 213, PC5-radio link control (RLC) 214, PC5-medium access control (MAC) 215, and/or PC5-PHY 216 in a remote UE 210, may be composed of PC5-SRAP 221, PC5-RLC 222, PC5-MAC 223, PC5-PHY 224, Uu-SRAP 225, Uu-RLC 226, Uu-MAC 227, and/or Uu-PHY 228 in a relay UE 220, and may be composed of Uu-SDAP or Uu-RRC 231, Uu-PDCP 232, Uu-SRAP 233, Uu-RLC 234, Uu-MAC 235, and/or Uu-PHY 236 in a base station 230. In the disclosure, the term "may be composed of" may be replaced with the term "may include". For example, the wireless protocol of U2N relay may include Uu-SDAP or Uu-RRC 211, Uu-PDCP 212, PC5-SRAP 213, PC5-RLC 214, PC5-MAC 215, and/or PC5-PHY 216 in the remote UE 210.

According to an embodiment, functions of the Uu-SDAPs 211 and 231 may include at least some of the following functions.
- Mapping between QoS flow and data radio bearer
- Marking QoS flow ID (QFI) in both DL and UL packets

According to an embodiment, functions of the Uu-RRCs 211 and 231 may include at least some of the following functions.
- Broadcast of system information related to AS and NAS
- Paging initiated by 5GC or NG-RAN
- Establishment and management of RRC connection between UE and NG-RAN, and addition, modification, and release of carrier aggregation and of dual-connectivity between NRs or between NR and LTE (establishment, maintenance, and release of an RRC connection between the UE and NG-RAN including: addition, modification and release of carrier aggregation; addition, modification, and release of dual connectivity in NR or between E-UTRA and NR.)
- Security functions including key management
- Establishment, configuration, maintenance, and release of signaling radio bearers (SRBs) and data radio bearers (DRBs)
- UE mobility support (mobility functions including: handover and context transfer; UE cell selection and reselection and control of cell selection and reselection; inter-RAT mobility.)
- QoS management functions
- UE measurement reporting and control of the reporting
- Radio link failure detection and recovery (detection of and recovery from radio link failure)
- NAS message transmission (NAS message transfer to/from NAS from/to UE)

Additionally, some of the following functions may be included to support functions for sidelink.
- Configuration of sidelink resource allocation via system information or dedicated signaling
- Reporting of UE sidelink information
- Measurement configuration and reporting related to sidelink
- Sidelink traffic pattern reporting via UE assistance information (reporting of UE assistance information for SL traffic pattern(s))

Main functions of the Uu-PDCPs 212 and 232 may include some of the following functions.
- Transfer of data (user plane or control plane)
- Maintenance of PDCP sequence numbers (SNs)
- Header compression and decompression using robust header compression (ROHC) protocol
- Header compression and decompression using EHC protocol
- Compression and decompression of uplink PDCP service data units (SDUs): DEFLATE-based UDC only
- Ciphering and deciphering
- Integrity protection and integrity verification
- Timer-based SDU discard
- Routing for split bearers
- Duplication
- Reordering and in-order delivery
- Out-of-order delivery
- Duplicate discarding

According to an embodiment, functions of the PC5-SRAPs and Uu-SRAPs 213, 221, 225, and 233 may include at least some of the following functions.
- Data transfer
- Determination of UE identifier and bearer identifier for data packets (determination of UE ID field and bearer ID field for data packets)
- Determination of egress link
- Determination of egress RLC channel

Main functions of the PC5 and Uu RLCs 214, 222, 226, and 234 may include some of the following functions.
- Transfer of upper layer protocol data units (PDUs)
- Numbering independent of PDCP (sequence numbering independent of the one in PDCP (UM and AM))
- Error correction through automatic repeat request (ARQ) (AM only)
- Segmentation (AM and UM) and re-segmentation (AM only) of RLC SDUs
- Reassembly of SDU (AM and UM)
- Duplicate detection (AM only)
- RLC SDU discard (AM and UM)
- RLC re-establishment
- Protocol error detection (AM only)

According to an embodiment, main functions of the PC5 and Uu MACs 215, 223, 227, and 228 may include at least some of the following functions.
- Mapping between logical channels and transport channels
- Multiplexing of MAC SDUs belonging to one or more logical channels (multiplexing of MAC SDUs from one or different logical channels onto transport blocks (TB) to be delivered to the physical layer on transport channels)
- Demultiplexing of MAC SDUs belonging to one or more logical channels (demultiplexing of MAC SDUs to one or different logical channels from transport blocks (TB) delivered from the physical layer on transport channels)
- Scheduling information reporting
- Error correction through HARQ
- Logical channel prioritization
- Priority handling between overlapping resources of one UE
- Radio resource selection
- Packet filtering
- Priority handling between uplink and sidelink transmissions for a given UE
- Sidelink CSI reporting

According to an embodiment, the PC5 and Uu PHY layers 216, 224, 228, and 236 may encode and modulate upper-layer data to generate orthogonal frequency division multiplexing (OFDM) symbols, convert the symbols into RF band signals, and then transmit the signals through an antenna. In addition, the PC5 and Uu PHY layers 216, 224, 228, and 236 may demodulate and decode the received OFDM symbols and transmit the same to the upper layers.

According to an embodiment, transmission between the remote UE 210 and the relay UE 220 in a U2N relay may be performed through a PC5 relay RLC channel 240. Transmission between the relay UE 220 and the base station 230 may be performed through a Uu relay RLC channel 250.

According to an embodiment, for uplink data transmission of the U2N relay, in case that an SRAP service data unit (SDU) received from the upper layer does not belong to SRBO, the PC5-SRAP 213 of the remote UE 210 may determine a UE ID corresponding to the relay UE 220, which is received from the base station 230. In case that the SRAP SDU received from the upper layer is an SRB, the PC5-SRAP 213 of the remote UE 210 may determine a bearer ID to be identical to an SRB ID. When the SRAP SDU received from the upper layer is a DRB, the PC5-SRAP 213 of the remote UE 210 may determine a bearer ID by using a value obtained by subtracting 1 from an DRB ID. The PC5-SRAP 213 may generate an SRAP data protocol data unit (PDU) by combining an SRAP data SDU and an SRAP header containing UE ID and bearer ID information.

In case that the SRAP SDU received from the upper layer belongs to SRBO, the PC5-SRAP 213 of the remote UE 210 may generate an SRAP data PDU, which is the same as an SRAP data SDU, without including an SRAP header. In case that the SRAP data PDU does not belong to SRBO, the SRAP data PDU may be transmitted on an egress PC5 relay RLC channel configured to transmit SRB or DRB received from the base station. In this case, one or more SRBs or one or more DRBs may be configured to be transmitted using one PC5 relay RLC channel, and may also be configured to be transmitted using different PC5 relay RLC channels. In case that bearer IDs of the SRB and DRB are the same, the SRB and DRB may be distinguished as being transmitted using different PC5 relay RLC channels. In case that the SRAP data PDU belongs to SRB0 or SRB1, the SRAP data PDU may be transmitted on the egress PC5 relay RLC channel based on a specified configuration. The specified configuration may be as shown in [Table 3-1] and [Table 3-2]. For example, the specified configuration may be as shown in [Table 3-1] and/or [Table 3-2]

**[Table 3-1]**

| Parameters that are specified for NR sidelink L2 U2N Relay operations, which is used for the PC5 Relay RLC channel for Remote UE's SRB0 message transmission/reception. The PC5 Relay RLC channel using this configuration is named as SL-RLC0. | | | |
|---|---|---|---|
| **Name** | **Value** | **Semantics description** | **Ver** |
| RLC configuration | | AM | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>logicalChannelIdentity* | 56 | | |
| MAC configuration | | | |
| *>priority* | 1 | | |
| *>proritisedBitRate* | Infinity | | |
| *>logicalChannelGroup* | 0 | | |
| *>schedulingRequestId* | 0 | The scheduling request configuration with this value is applicable for this SCCH if configured by the network. The scheduling request configuration is not applicable to L2 U2N Remote UE. | |

| **Name** | **Value** | **Semantics description** | **Ver** |
|---|---|---|---|
| *>sl-HARQ-FeedbackEnabled* | Undefined | Selected by the transmitting UE, up to UE implementation | |

**[Table 3-2]**

| Parameters of the PC5 Relay RLC Channel used for Remote UE's SRB1 RRC message transmission and reception. The PC5 Relay RLC Channel using this configuration is named as SL-RLC1. | | | |
|---|---|---|---|
| **Name** | **Value** | **Semantics description** | **Ver** |
| RLC configuration | | AM | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>IogicalChannelIdentity* | 57 | | |
| MAC configuration | | | |
| *>priority* | 1 | | |
| *>proritisedBitRate* | Infinity | | |
| *>logicalChannelGroup* | 0 | | |
| *>schedulingRequestId* | 0 | The scheduling request configuration with this value is applicable for this SCCH if configured by the network. | |

According to an embodiment, the PC5-SRAP 221 of the relay UE 220 may deliver the SRAP data PDU received through the PC5 relay RLC channel to the Uu-SRAP 225. If the received SRAP data PDU has been received via SL-RLC0, the Uu-SRAP 225 of the relay UE 220 may determine a UE ID corresponding to the remote UE 210, which is received from the base station 230. The Uu-SRAP 225 of the relay UE 220 may determine a bearer ID to be 0. The Uu-SRAP 225 may generate an SRAP data protocol data unit (PDU) by combining an SRAP data SDU and an SRAP header containing UE ID and bearer ID information. The Uu-SRAP 225 of the relay UE 220 may transmit the SRAP data PDU on an egress Uu relay RLC channel configured to transmit SRB or DRB, the channel being configured from the base station 230. In this case, one or more SRBs or one or more DRBs may be configured to be transmitted using one Uu relay RLC channel, and may also be configured to be transmitted using different Uu relay RLC channels. If bearer IDs of the SRB and DRB are the same, the SRB and DRB may be distinguished as being transmitted using different PC5 relay RLC channels.

According to an embodiment, for downlink transmission of the U2N relay, the Uu-SRAP 225 of the relay UE 220 may deliver a received SRAP data packet to the PC5-SRAP 221. The PC5-SRAP 221 of the relay UE 220 may determine the remote UE 210 corresponding to the UE ID included in the SRAP header, and the PC5-SRAP 221 of the relay UE 220 may transmit the SRAP data PDU on an egress PC5 relay RLC channel corresponding to the bearer ID configured to transmit SRB or DRB, the channel being configured from the base station 230. In this case, one or more SRBs or one or more DRBs may be configured to be transmitted using one Uu relay RLC channel, and may also be configured to be transmitted using different Uu relay RLC channels. If bearer IDs of the SRB and DRB are the same, the SRB and DRB may be distinguished as being transmitted using different Uu relay RLC channels.

According to an embodiment, if the SRAP data PDU belongs to SRBO, the PC5-SRAP 221 of the relay UE 220 may remove the SRAP header from the SRAP data PDU. If the SRAP data PDU belongs to SRB0 or SRB1, the SRAP data PDU may be transmitted on an egress PC5 relay RLC channel based on a specified configuration, as shown in [Table 3-1] and/or [Table 3-2]. If the SRAP data PDU received by the PC5-SRAP 213 of the remote UE 210 belongs to SRBO, the SRAP SDU may be delivered to the Uu-RRC 211.

If the received SRAP data PDU does not belong to SRB0 and a radio bearer (RB) of the remote UE 210 is configured from the base station 230, the PC5-SRAP 213 of the remote UE 210 may remove the SRAP header, and deliver the SRAP SDU to the Uu-PDCP 212 of the remote UE 210 corresponding to the bearer ID (for DRB, a value obtained by adding 1 to the bearer ID) included in the SRAP header. If the received SRAP data PDU does not belong to SRBO, and the RB of the remote UE 210 is not configured from the base station 230, the PC5-SRAP 213 of the remote UE 210 may remove the SRAP header and deliver the SRAP SDU to the Uu-PDCP 212 corresponding to SRB1.

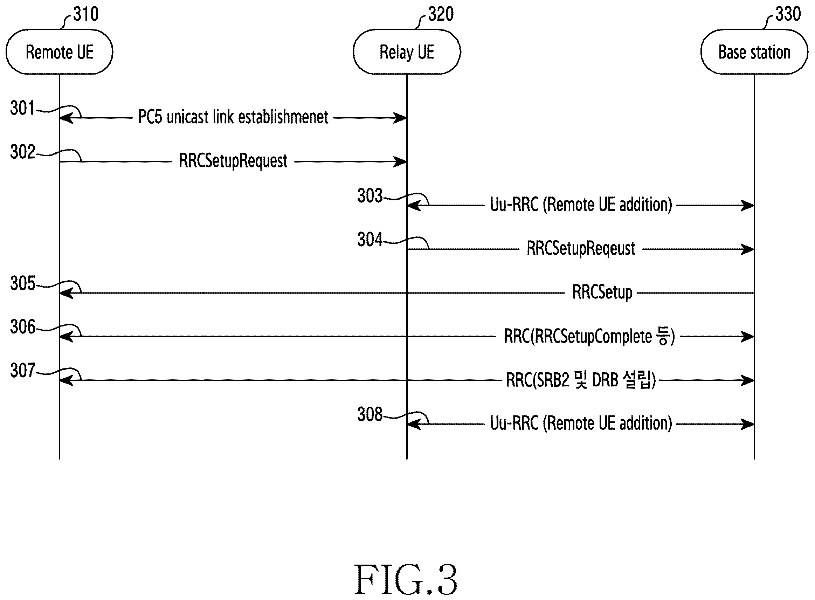

FIG. 3 is a flowchart of a procedure in which a base station configures an adaptation layer of a UE-to-network (U2N) relay according to an embodiment of the disclosure.

Referring to FIG. 3, according to an embodiment, a remote UE 310 may establish a PC5 unicast link in operation 301 to communicate with a base station 330 via a relay UE 320. In this case, an establishment procedure may follow the embodiment of FIG. 1. For example, the PC5 unicast link may be established via operations 101 to 103 described in FIG. 1. Therefore, the embodiment of FIG. 3 and the embodiment of FIG. 1 in the disclosure may be combined.

According to an embodiment, in operation 303, the relay UE 320 may provide the base station with information for relay communication of the remote UE 310. Information that may be included in this case may be illustrated as in [Table 4].

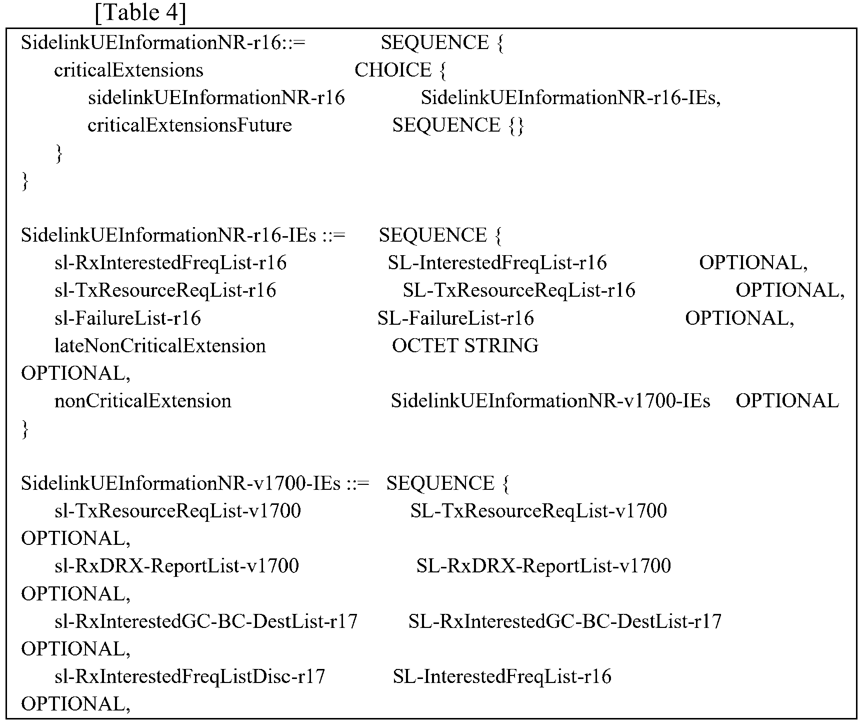

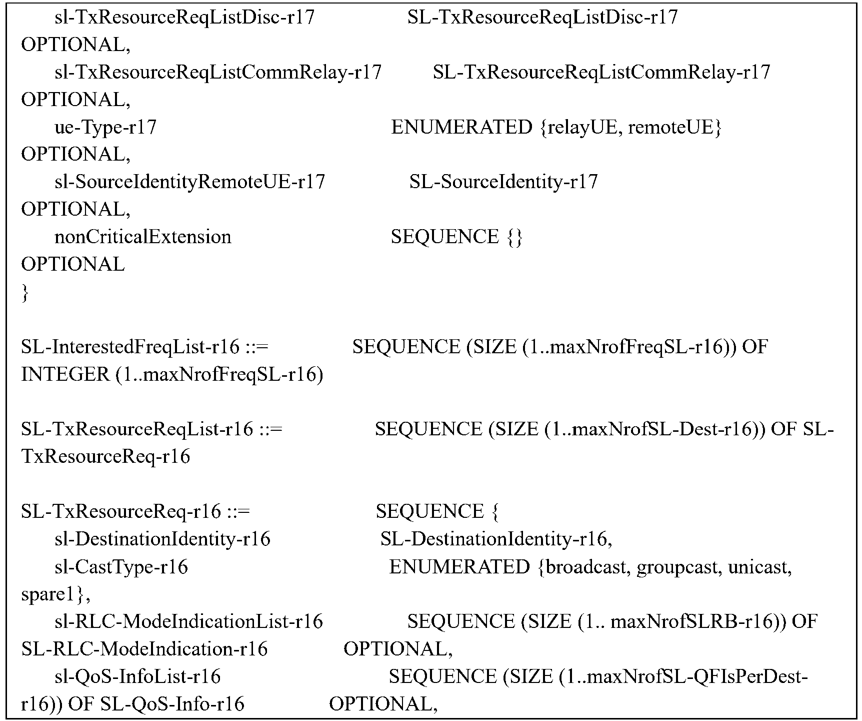

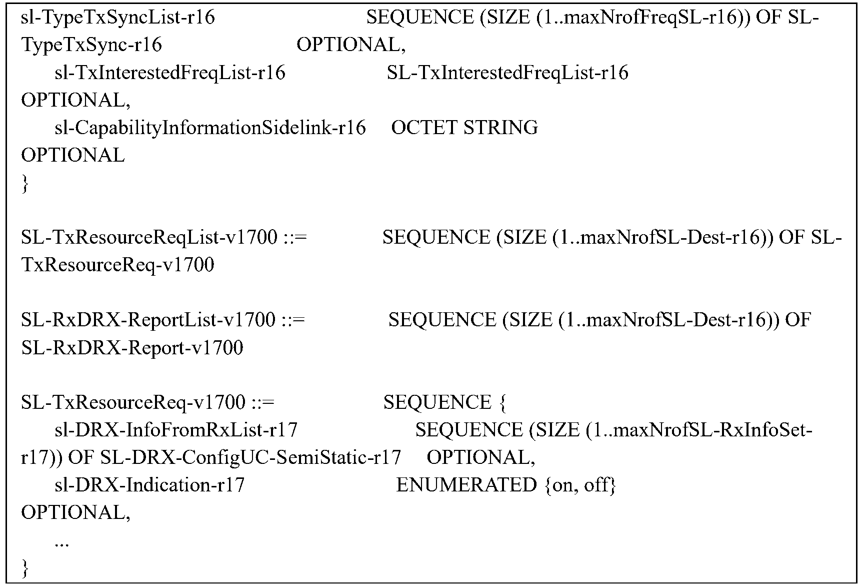

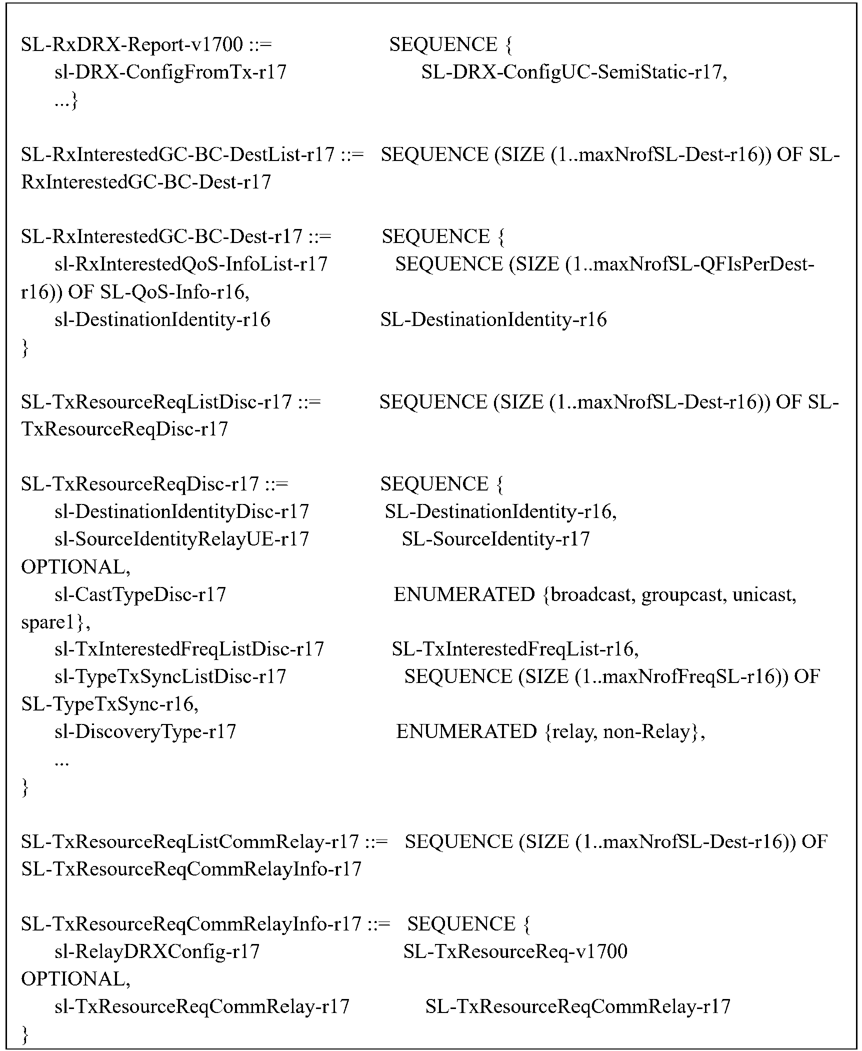

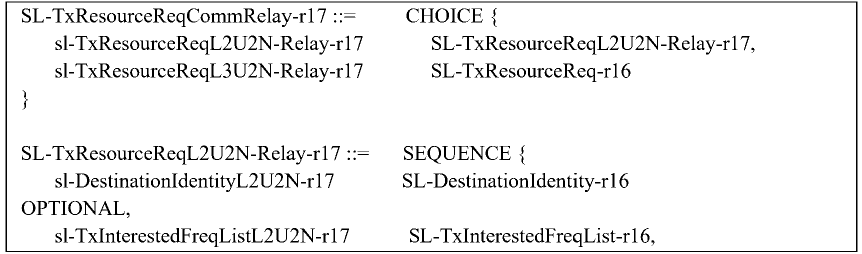

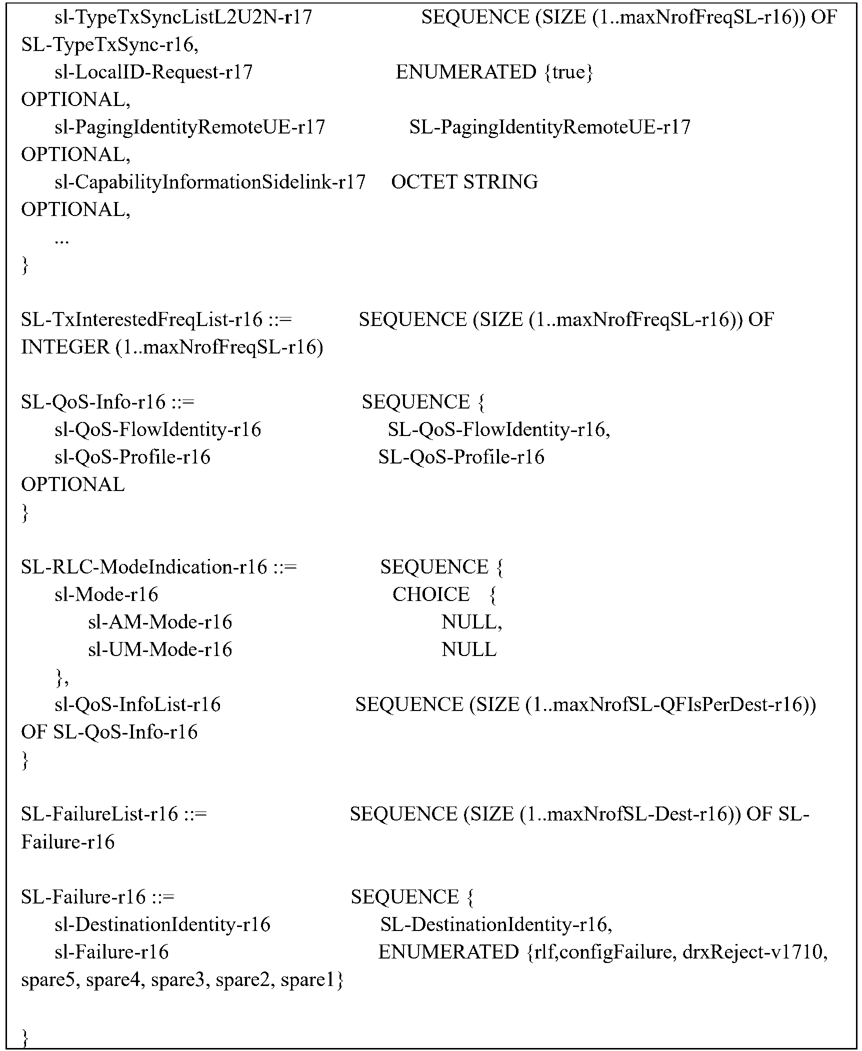

The base station 330 may transmit or deliver, to the relay UE 320, a configuration for transmitting an SRB of the remote UE 310, based on the information provided by the relay UE 320 in operation 303. Information transmitted in this case may be illustrated as in [Table 5].

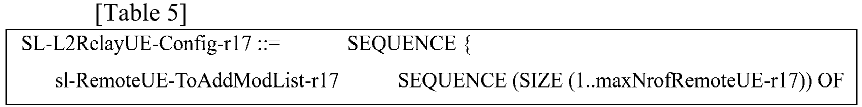

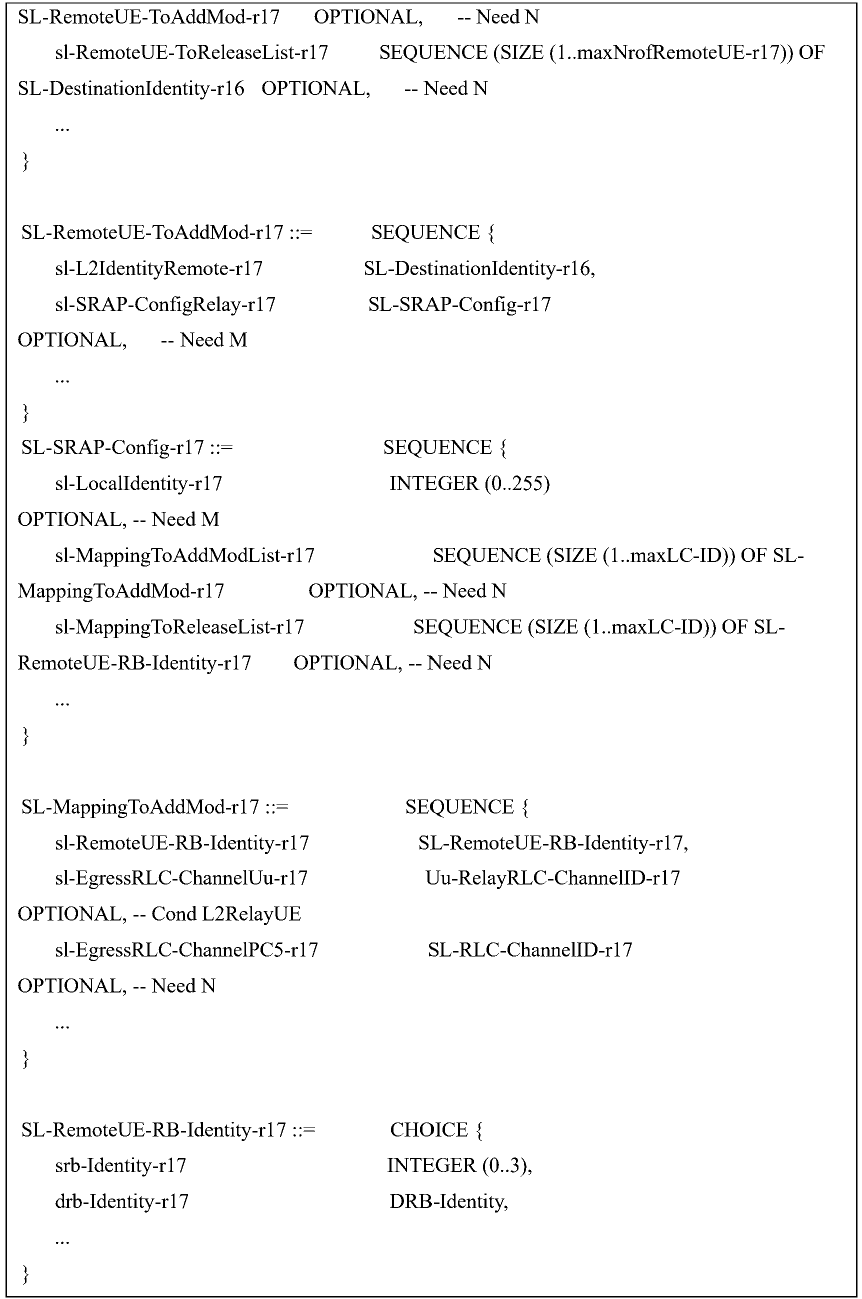

In this case, the relay UE 320 may acquire a local ID corresponding to a layer-2 ID of the remote UE 310, and the acquired local ID may be the same as the UE ID used in the embodiment of FIG. 2.

In operation 304, the relay UE 320 may transmit (RRCSetupRequest) an SRB0 message 302, which is transmitted by the remote UE 310, to the base station 330 through the Uu relay RLC channel configured in operation 303. A transmission method may be illustrated as in FIG. 2. For example, the SRB0 message 302 transmitted by the remote UE 310 may be transmitted to the base station 330 according to the method illustrated in FIG. 2. Therefore, the embodiment of FIG. 2 and the embodiment of FIG. 3 in the disclosure may be combined.

According to an embodiment, in operation 305, the relay UE 320 may transmit (RRCSetup), to the remote UE 310, the SRB0 message which has been received from the base station 330 so as to be transmitted to the remote UE 310. A transmission method may be illustrated as in FIG. 2. Information transmitted in this case may be illustrated as in [Table 6].

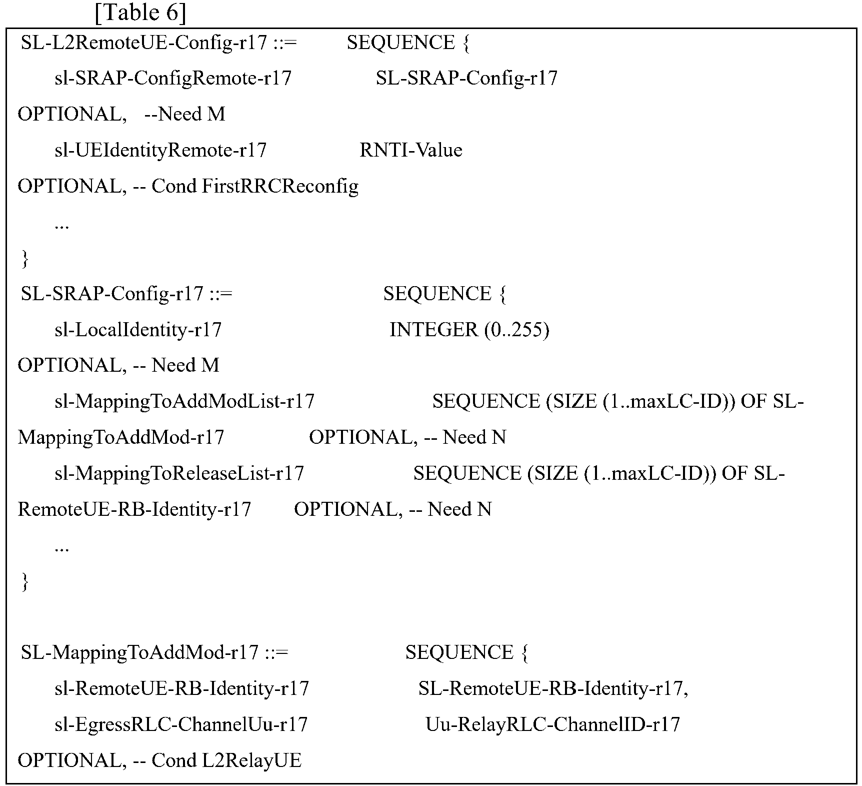

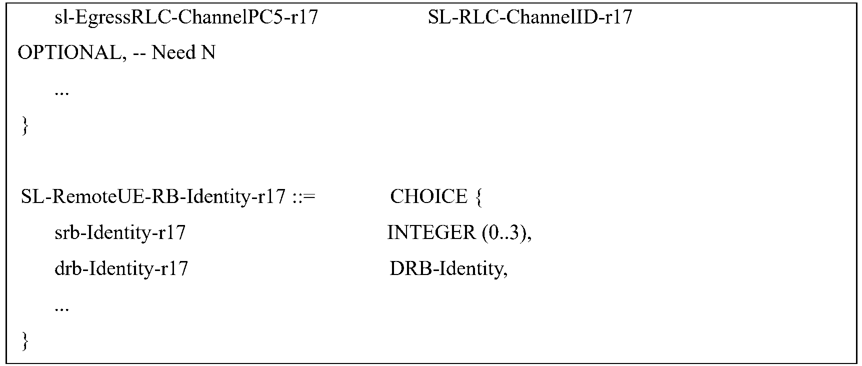

The remote UE 310 may acquire a local ID corresponding to the relay UE 320 for communication with the base station 330, and the acquired local ID may be substantially the same as the UE ID used in the embodiment of FIG. 2.

According to an embodiment, in operation 306, the remote UE 310 may transmit a message to and/or receive a message from the base station 330 by using SRB1. During message transmission and/or reception using SRB1, registration, authentication, and/or security establishment may be performed via a core network and NAS, and capability information exchange and AS security establishment may be performed between the base station 330 and the remote UE 310. A transmission method may be illustrated as in FIG. 2 (RRC (e.g., RRCSetupComplete)).

According to an embodiment, in operation 307, the base station 330 may transmit and/or receive a message for establishing SRB2 and DRBs to/from the remote UE 310. During the transmission and/or reception of the message for establishing SRB2 and DRBs, a configuration of a PC5 relay RLC channel for transmitting the SRB2 and DRBs may also be transmitted. A transmission method may be illustrated as in FIG. 2, and information to be transmitted may be illustrated as in [Table 6].

According to an embodiment, in operation 308, the base station 330 may transmit, to the relay UE 320, the configuration (or configuration information) of the PC5 relay RLC channel and Uu relay RLC channel for transmitting the SRB2 and DRBs to the remote UE 310. Information to be transmitted may be illustrated as in [Table 5].

Although not illustrated in the drawing, when the remote UE 310 or the relay UE 320 is to perform transmission using a PC5 relay RLC channel that is not based on a specified configuration, the Tx UE may configure the RLC channel via PC5-RRC signaling, and information to be transmitted may be illustrated as in [Table 7].

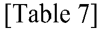

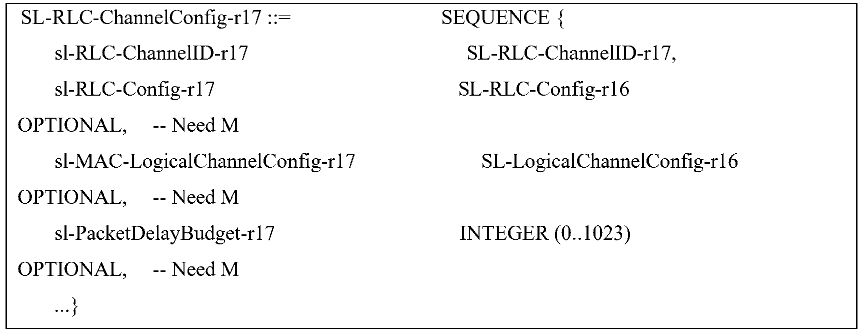

RLC configuration information to be applied when the reception UE receives the PC5 relay RLC channel may be determined by the reception UE itself.

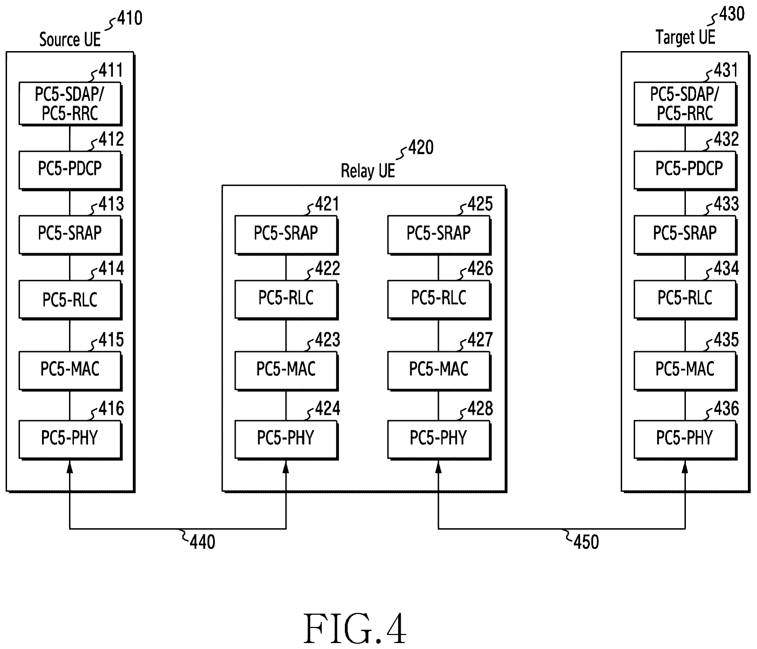

FIG. 4 is a diagram illustrating a wireless protocol structure of a UE-to-UE (U2U) relay according to an embodiment of the disclosure.

Referring to FIG. 4, a source UE 410, a relay UE 420, and/or a target UE 430 according to an embodiment may establish a direct connection via a sidelink interface. For example, the source UE 410 and the relay UE 420 may be configured to be directly connected via a sidelink interface, and the relay UE 420 and the target UE 430 may be configured to be directly connected via a sidelink interface. If the source UE 410 and the target UE 430 are within a range where sidelink communication is possible, the source UE 410 and the target UE 430 may be configured to be directly connected via a sidelink interface. The source UE 410 and the target UE 430 may be referred to as UEs capable of transmitting and/or receiving data and signaling to/from the target UE 430 and the source UE 410 via U2U relay, respectively. In the disclosure, the source UE 410 may be referred to as a UE that transmits a request to establish a PC5 unicast link or a request to establish a sidelink radio bearer (SLRB) in a procedure for communicating with the target UE 430. The source UE 410 may initiate PC5 unicast link establishment via the relay UE 420 in order to transmit and/or receive data and signaling to/from the target UE 430 via U2U relay. In case that a sidelink reference signal received power (SL-RSRP) between the source UE 410 and the relay UE 420, or between the relay UE 420 and the target UE 430 decreases to a certain level or lower during transmission and/or reception of data and signaling to/from the target UE 430 via the relay UE 420, or if the upper layer indicates reselection due to satisfaction of a relay UE reselection condition, the source UE 410 may reselect or determine a third UE as a relay UE instead of a connection to the existing relay UE 420, and the source UE 410 may initiate PC5 unicast link establishment via the third UE in order to provide a service associated with the target UE 430 through the U2U relay. For example, the upper layer may include a V2X layer and/or a prose layer.

According to an embodiment, wireless protocols of U2U relay may include PC5-SDAPs or PC5-RRCs 411 and 431, PC5-PDCPs 412 and 432, PC5-SRAPs 413 and 433, PC5-RLCs 414 and 434, PC5-MACs 415 and 435, PC5-PHYs 416 and 436 in the source UE 410 and the target UE 430, respectively, and may include PC5-SRAPs 421 and 425, PC5-RLCs 422 and 426, PC5-MACs 423 and 427, and PC5-PHYs 424 and 428 in the relay UE 420.

According to an embodiment, functions of the PC5-SDAPs 411 and 431 may include at least some of the following functions.
- Mapping between QoS flow and sidelink data radio bearer

Main functions of the PC5-RRCs 411 and 431 may include some of the following functions.
- Transfer of PC5-RRC message between peer UEs
- Maintenance and release of PC5-RRC connection between two UEs
- Detection of sidelink radio link failure for PC5-RRC connection

Main functions of the PC5-PDCPs 412 and 432 may include some of the following functions.
- Transfer of data (user plane or control plane)
- Maintenance of PDCP sequence numbers (SNs)
- Header compression and decompression using ROHC protocol
- Header compression and decompression using EHC protocol
- Compression and decompression of uplink PDCP SDUs: deflate-based UDC only
- Ciphering and deciphering
- Integrity protection and integrity verification
- Timer-based SDU discard
- Routing for split bearers
- Reordering and in-order delivery
- Out-of-order delivery only for unicast transmission

Main functions of the PC5-SRAPs 413, 421, 425, and 433 may include some of the following functions.
- Data transfer
- Determination of UE identifier and bearer identifier for data packets (determination of UE ID field and bearer ID field for data packets)
- Determination of egress link
- Determination of egress RLC channel

According to an embodiment, functions of the PC5-RLCs 414, 422, 426, and 434 may include at least some of the following functions.
- Transfer of upper-layer PDUs
- Numbering independent of PDCP (sequence numbering independent of the one in PDCP (UM and AM))
- Error correction through ARQ (AM only)
- Segmentation (AM and UM) and re-segmentation (AM only) of RLC SDUs
- Reassembly of SDU (AM and UM)
- Duplicate detection (AM only)
- RLC SDU discard (AM and UM)
- RLC re-establishment
- Protocol error detection (AM only)

According to an embodiment, functions of the PC5-MACs 415, 423, 427, and 435 may include at least some of the following functions.
- Mapping between logical channels and transport channels
- Multiplexing of MAC SDUs belonging to one or more logical channels (multiplexing of MAC SDUs from one or different logical channels onto transport blocks (TB) to be delivered to the physical layer on transport channels)
- Demultiplexing of MAC SDUs belonging to one or more logical channels (demultiplexing of MAC SDUs to one or different logical channels from transport blocks (TB) delivered from the physical layer on transport channels)
- Scheduling information reporting
- Error correction through HARQ
- Logical channel prioritization
- Priority handling between overlapping resources of one UE
- Radio resource selection
- Packet filtering
- Priority handling between uplink and sidelink transmissions for a given UE
- Sidelink CSI reporting

According to an embodiment, the PC5-PHY layers 416, 424, 428, and 436 may encode and modulate upper-layer data to generate OFDM symbols, convert the symbols into radio frequency (RF) band signals, and then transmit the signals through an antenna. In addition, the received OFDM symbols may be demodulated and decoded and delivered to the upper layers.

In the U2U relay, transmission between the source UE 410 and the relay UE 420 may be performed through a PC5 relay RLC channel 440, and transmission between the relay UE 420 and the target UE 430 may be performed through a PC5 relay RLC channel 450.

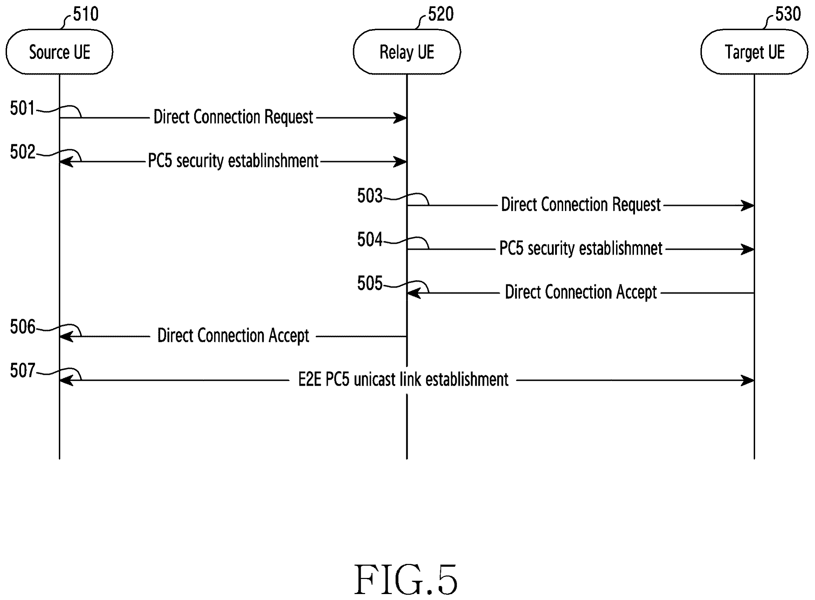

FIG. 5 is a flowchart of a procedure for establishing a PC5 unicast link of a UE-to-UE (U2U) relay according to an embodiment of the disclosure.

Referring to FIG. 5, according to an embodiment, a source UE 510 may transmit a direct communication request message to a relay UE 520 to communicate with a target UE 530 via the relay UE 520 in operation 501.

According to an embodiment, when the relay UE 520 receives the direct communication request message in operation 501, the relay UE 520 may perform PC5 security configuration, such as mutual authentication and encryption key configuration, for a PC5 unicast link to the source UE 510 in operation 502.

According to an embodiment, if it is determined that mutual authentication, encryption key configuration, etc. for the direct connection establishment between the relay UE 520 and the source UE 510 have been performed normally, the relay UE 520 may transmit the direct communication request message to the target UE 530 in operation 503.

According to an embodiment, when the direct communication request message is received in operation 503, the target UE 530 may perform PC5 security configuration, such as mutual authentication and encryption key configuration, for a PC5 unicast link to the relay UE 520 in operation 504.

According to an embodiment, if it is determined that mutual authentication, encryption key configuration, etc. for the direct connection establishment between the target UE 530 and the relay UE 520 have been normally performed, the target UE 530 may transmit a direct communication acceptance message to the relay UE 520 in operation 505, and the PC5 unicast link establishment between the relay UE 520 and the target UE 530 may be completed.

According to an embodiment, when the relay UE 520 receives the direct communication acceptance message from the target UE 530 in operation 505, the relay UE 520 may transmit the direct communication acceptance message to the source UE 510 in operation 506 to complete the establishment of the PC5 unicast link to the source UE 510, and the establishment of the PC5 unicast link between the source UE 510 and the relay UE 520 is completed.

According to an embodiment, in order to establish an end-to-end PC5 unicast link to the target UE 530, the source UE 510 may initiate or perform PC5 unicast link establishment via the relay UE 520 in operation 507. The end-to-end PC5 unicast link establishment may include the direct communication request, PC5 security configuration, and/or direct communication acceptance transmitted between the source UE 510 and the target UE 530.

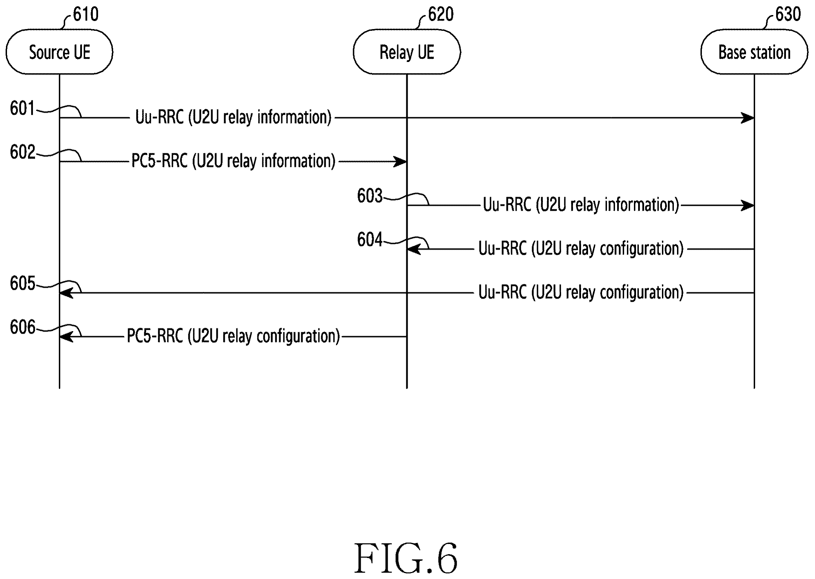

FIG. 6 is a flowchart of a procedure for acquiring a local identifier (local identity) of a UE-to-UE (U2U) relay from a base station according to an embodiment of the disclosure.

Referring to FIG. 6, a source UE 610 according to an embodiment may need to acquire a UE ID corresponding to a target UE, which is included in an SRAP header, in order to transmit an end-to-end message with respect to the target UE. The source UE 610 of FIG. 6 in the disclosure may correspond to the source UE 510 of FIG. 5, and unless otherwise inconsistent, the description of the source UE 510 of FIG. 5 may also be applied to the source UE 610 of FIG. 6.

According to an embodiment, when the source UE 610 is in an RRC_IDLE state or an RRC_INACTIVE state in which an RRC connection to a base station 630 has not been established, a procedure for establishing an RRC connection may be initiated. If the source UE 610 is in an RRC_CONNECTED state in which an RRC connection to the base station 630 has been established, the source UE 610 may provide, in operation 601, the base station 630 with information for U2U relay communication with the target UE. Information that may be included in the information for U2U relay communication with the target UE may be illustrated as in [Table 4], and information that may be additionally transmitted may include some of examples in [Table 8]. For example, the information for U2U relay communication with the target UE may include at least one of information elements included in [Table 4]. For example, the information for U2U relay communication with the target UE may include at least one of information elements included in [Table 4].

**[Table 8]**

| |
|---|
| - Layer-2 ID of source UE |
| - Layer-2 ID of target UE |
| - Layer-2 ID of relay UE |
| - Request local ID used in U2U relay |
| - Whether to use U2U relay |

According to an embodiment, in order to provide the relay UE 620 with information for U2U relay, the source UE 610 may provide, deliver, or transmit the information for U2U relay communication with the target UE to the relay UE 620 in operation 602. Information that may be included in the information provided to the relay UE 620 may include at least some of the examples in [Table 8].

According to an embodiment, the relay UE 620 may need to acquire a UE ID of the source UE 610 and/or a UE ID corresponding to the target UE, the UE ID(s) being included in an SRAP header, in order to transmit an end-to-end message between the source UE 610 and the target UE. If the relay UE 620 has received a message transmitted by the source UE 610 in operation 602, or a PC5 unicast link between the source UE 610 and the relay UE 620 and a PC5 unicast link between the relay UE 620 and the target UE are established, and then it is determined that acquisition of the UE IDs corresponding to the source UE 610 and the target UE is necessary, the relay UE 620 may provide, in operation 603, the base station 630 with information for U2U relay communication between the source UE 610 and the target UE. Information that may be included in the information for U2U relay communication, which has been provided to the base station 630, may be illustrated as in [Table 4], and information that may be additionally transmitted may include some of the examples in [Table 8].

According to an embodiment, when the base station 630 receives the information for U2U relay communication between the source UE 610 and the target UE from the source UE 610 or the relay UE 620 in operation 601 or operation 603, the base station 630 may provide SRAP configuration information for U2U relay communication to the source UE 610 or the relay UE 620 in operation 604 or operation 605. For example, the base station 630 may provide the SRAP configuration information for U2U relay communication to the relay UE 620 in operation 604. For example, the base station 630 may provide the SRAP configuration information for U2U relay communication to the source UE 610 in operation 605. Information that may be included in the SRAP configuration information may include at least some of examples in [Table 9].

**[Table 9]**

| |
|---|
| - Layer-2 ID of source UE |
| - Layer-2 ID of target UE |
| - Layer-2 ID of relay UE |
| - Local ID used in U2U relay |

If the relay UE 620, in operation 603 or operation 604, has received a local ID used in the U2U relay from the base station 630 or determined a local ID used in the U2U relay on its own, the relay UE 620 may provide or transmit local ID information to the source UE 610 in operation 606. Information that may be included in the information (e.g., the local ID information) provided to the source UE 610 may be at least some of the examples in [Table 9].

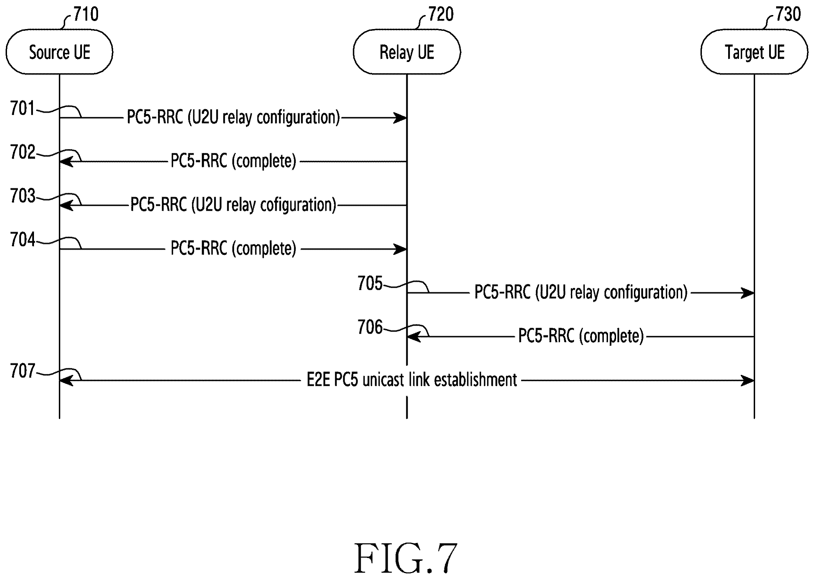

FIG. 7 is a flowchart of a procedure for configuring, with a specified configuration, an adaptation layer for relaying an end-to-end sidelink signaling radio bearer (SL-SRB) of a UE-to-UE (U2U) relay according to an embodiment of the disclosure.

Referring to FIG. 7, according to an embodiment, a source UE 710 and a relay UE 720 may have established a PC5 unicast link, and the relay UE 720 and a target UE 730 may have established a PC5 unicast link. The establishment of each PC5 unicast link may follow the example of FIG. 5. The source UE 710 of FIG. 7 in the disclosure may correspond to the source UE 510 of FIG. 5, and unless otherwise inconsistent, the description of the source UE 510 of FIG. 5 may also be applied to the source UE 710 of FIG. 7. Therefore, the description of the establishment of the PC5 unicast link described in operations 501 to 502 of FIG. 5 may also be applied to FIG. 7.

According to an embodiment, in order to receive and transmit an end-to-end SL-SRB message, if at least one of the following conditions is satisfied, the source UE 710 may transmit PC5-RRC signaling to the relay UE 720 and configure SRAP, in operation 701.
Condition 1: When transmission of at least one end-to-end SL-SRB message to be transmitted to the target UE 730 is requested by the upper layer
Condition 2: When at least one PC5 relay RLC channel or SRAP for transmission to the target UE 730 has not been configured
Condition 3: When a PC5 unicast link has been established between the source UE 710 and the relay UE 720
Condition 4: When the upper layer has indicated to initiate a U2U relay with the target UE 730

Information that may be included in information transmitted during PC5-RRC signaling transmission may be at least some of examples in [Table 10].

**[Table 10]**

| |
|---|
| - Addition/modification/deletion information for U2U relay |
| - Layer-2 ID of target UE |
| - Local ID used in U2U relay |

According to an embodiment, when the relay UE 720 receives an SRAP configuration from the source UE 710 in operation 701, if it is determined that the configuration has been normally applied, the relay UE 720 may transmit information, which indicates that application of the configuration has been completed, to the source UE 710 via PC5-RRC signaling in operation 702. For example, when the source UE 710 transmits the SRAP configuration in operation 701, and/or receives SRAP configuration application completion in operation 702, the source UE 710 may determine or identify that the SRAP configuration for end-to-end SL-SRB transmission to the target UE 730 has been completed. For example, when the relay UE 720 receives the SRAP configuration in operation 701, and/or transmits SRAP configuration application completion in operation 702, the relay UE 720 may determine or identify that the SRAP configuration between the source UE 710 and the relay UE 720 has been completed.

In order to receive and transmit an end-to-end SL-SRB message, if at least one of the following conditions is satisfied, the relay UE 720 may transmit PC5-RRC signaling to the source UE 710 and configure SRAP, in operation 703.
Condition 1: When at least one PC5 relay radio link control (RLC) channel or SRAP for transmission from the source UE 710 to the target UE 730 has not been configured
Condition 2: When a PC5 unicast link has been established between the source UE 710 and the relay UE 720
Condition 3: When the upper layer has indicated to initiate a U2U relay between the source UE 710 and the target UE 730

Information that may be included in information transmitted during PC5-RRC signaling transmission may be at least some of the examples in [Table 10].

According to an embodiment, when the source UE 710 receives an SRAP configuration from the relay UE 720 in operation 703, if it is determined that the configuration has been normally applied, the source UE 710 may transmit information, which indicates that application of the configuration has been completed, to the relay UE 720 via PC5-RRC signaling in operation 704. For example, when the source UE 710 receives the SRAP configuration in operation 703, and/or transmits SRAP configuration application completion in operation 704, the source UE 710 may determine or identify that the SRAP configuration for end-to-end SL-SRB transmission has been completed. For example, when the relay UE 720 transmits the SRAP configuration in operation 703, and/or receives the SRAP configuration application completion in operation 704, the relay UE 720 may determine or identify that the SRAP configuration between the source UE 710 and the relay UE 720 has been completed.

According to an embodiment, in order to receive and transmit an end-to-end SL-SRB message, if at least one of the following conditions is satisfied, the relay UE 720 may transmit PC5-RRC signaling to the target UE 730 and configure SRAP, in operation 705.
Condition 1: When at least one PC5 relay RLC channel or SRAP for transmission from the source UE 710 to the target UE 730 has not been configured
Condition 2: When a PC5 unicast link has been established between the source UE 710 and the relay UE 720
Condition 3: When a PC5 unicast link has been established between the relay UE 720 and the target UE 730
Condition 4: When the source UE 710 has configured SRAP via PC5-RRC signaling in operation 701
Condition 5: When the SRAP configuration between the source UE 710 and the relay UE 720 has been completed
Condition 6: When the upper layer has indicated to initiate a U2U relay between the source UE 710 and the target UE 730

Information that may be included in information transmitted via PC5-RRC signaling may be at least some of examples in [Table 11].

**[Table 11]**

| |
|---|
| - Addition/modification/deletion information for U2U relay |
| - Layer-2 ID of source UE |
| - Local ID used in U2U relay |

According to an embodiment, when the target UE 730 receives an SRAP configuration from the relay UE 720 in operation 705, if it is determined that the configuration has been normally applied, the target UE 730 may transmit information, which indicates that application of the configuration has been completed, to the relay UE 720 via PC5-RRC signaling in operation 706. For example, when the target UE 730 receives the SRAP configuration in operation 705, and/or transmits SRAP configuration application completion in operation 706, the target UE 730 may determine that the SRAP configuration for end-to-end SL-SRB transmission has been completed. For example, when the relay UE 720 transmits the SRAP configuration in operation 705, and/or receives SRAP configuration application completion in operation 706, the relay UE 720 may determine that the SRAP configuration between the target UE 730 and the relay UE 720 has been completed.

According to an embodiment, the source UE 710 may initiate or perform establishment of the end-to-end PC5 unicast link to the target UE 730 in operation 707. SL-SRBs for transmitting signaling for exchanging end-to-end PC5-S and PC5-RRC messages may include SL-SRB0, SL-SRB1, SL-SRB2, and/or SL-SRB3, and configuration information on SL-SRB0, configuration information on SL-SRB1, configuration information on SL-SRB2, and/or configuration information on SL-SRB3 may be stored as specified configurations in the each of UEs 710, 720, and 730.

According to an embodiment, specified configuration information of SL-SRBs may be as in [Table 1-1], [Table 1-2], [Table 1-3], and/or [Table 1-4]. As another example, in order to distinguish between a non-relay target SL-SRB and a U2U relay target SL-SRB, specified configuration information of SL-SRBs may be stored as different specified configurations by changing some of the specified configurations in [Table 1-1], [Table 1-2], [Table 1-3], and/or [Table 1-4]. For example, a non-relay target SL-SRB may be stored with first configuration information (e.g., the specified configurations in [Table 1-1], [Table 1-2], [Table 1-3], and/or [Table 1-4]), and a U2U relay target SL-SRB may be stored with second configuration information different from the first configuration information. As an embodiment, one or more SL-SRB specified configurations for transmission of a combination including at least one of SL-SRB0, SL-SRB1, SL-SRB2, or SL-SRB3, which is subject to U2U relay, may have values different from logicalChannelIdentity in [Table 1-1], [Table 1-2], [Table 1-3], and/or [Table 1-4].

In order to distinguish between a PC5 RLC channel through which a non-relay target SL-SRB is transmitted and a PC5 RLC channel through which a U2U relay target SL-SRB is transmitted, PC5 relay RLC channels that are stored as specified configurations in the respective UEs 710, 720, and 730 may be used. The specified configuration information of SL-RLCs may be as in [Table 3-1] and/or [Table 3-2], and at least some of the specified configurations in [Table 3-1] and/or [Table 3-2] may be modified and stored as different specified configurations. For example, the PC5 RLC channel through which a non-relay target SL-SRB is transmitted may be stored with a first configuration (e.g., the specified configuration of [Table 3-1] and/or [Table 3-2]) in each UE 710, 720, or 730, and the PC5 RLC channel through which a U2U relay target SL-SRB is transmitted may be stored with a second configuration different from the first configuration in each UE 710, 720, or 730.

As an embodiment, one or more SL-RLC specified configurations for transmission of a combination including at least one of SL-SRB0, SL-SRB1, SL-SRB2, or SL-SRB3, which is subject to U2U relay, may have values different from logicalChannelIdentity in [Table 3-1] and/or [Table 3-2].

According to an embodiment, an SRAP transmitting part of the source UE 710 may determine or identify a UE identification or identity (ID) corresponding to the target UE 730 in order to transmit, to the target UE 730, an SRAP SDU received from the upper layer. The UE ID may be substantially the same as the local ID configured in the SRAP of the source UE 710 in operation 701 and/or operation 703. The SRAP of the source UE 710 may determine or identify a bearer ID based on the SL-SRB identity received from the upper layer. The SRAP transmitting part of the source UE 710 may generate an SRAP data PDU by combining or assembling the SRAP SDU with an SRAP header including the determined UE ID and bearer ID. The source UE 710 may transmit the generated SRAP data PDU to the relay UE 720 via the PC5 relay RLC channel indicated by the specified configuration configured for transmission of the SRAP data PDU via SL-SRB.

According to an embodiment, when the relay UE 720 receives the SRAP data PDU transmitted by the source UE 710, an SRAP receiving part of the relay UE 720 may deliver the SRAP data PDU, which is received from the lower layer, to an SRAP transmitting part to transmit the same to the target UE 730. The SRAP transmitting part of the relay UE 720 may determine or identify the target UE 730 corresponding to the UE ID in the SRAP header. The UE ID may be the same as the local ID configured in the SRAP of the relay UE 720 in operations 701, 703, and 705. If the UE ID is not configured in the SRAP, the relay UE 720 may discard or remove the SRAP data PDU. If the bearer ID included in the SRAP header is 0, 1, 2, or 3, the relay UE 720 may distinguish SL-DRB or SL-SRB based on the PC5 relay RLC channel through which the SRAP data PDU has been received. The relay UE 720 may perform transmission to the target UE 730 through the PC5 relay RLC channel indicated by the specified configuration configured for transmission of the SL-SRB corresponding to the bearer ID of the SRAP header.

According to an embodiment, when the target UE 730 receives the SRAP data PDU transmitted by the relay UE 720, an SRAP receiving part of the target UE 730 may discard the SRAP data PDU if the UE ID included in the header of the SRAP data PDU received from the lower layer is different from the local ID configured in operation 705. The SRAP receiving part of the target UE 730 may remove the header of the SRAP data PDU received from the lower layer, and deliver the SRAP SDU to a PDCP of the SL-SRB corresponding to the bearer ID included in the header of the SRAP data PDU. If the bearer ID included in the SRAP header is 0, 1, 2, or 3, the target UE 730 may distinguish SL-DRB or SL-SRB based on the PC5 relay RLC channel through which the SRAP data PDU has been received.

According to an embodiment, an SRAP transmitting part of the target UE 730 may determine or identify a UE ID corresponding to the source UE 710 in order to transmit, to the source UE 710, an SRAP SDU received from the upper layer. The UE ID may be substantially the same as the local ID configured in the SRAP of the target UE 730 in operation 705. The SRAP of the target UE 730 may determine a bearer ID based on the SL-SRB identity received from the upper layer. The SRAP transmitting part of the target UE 730 may generate an SRAP data PDU by combining the SRAP SDU with an SRAP header including the determined UE ID and bearer ID. The target UE 730 may transmit the generated SRAP data PDU to the relay UE 720 via the PC5 relay RLC channel indicated by the specified configuration configured for transmission of the SRAP data PDU via SL-SRB.

According to an embodiment, when the relay UE 720 receives the SRAP data PDU transmitted by the target UE 730, the SRAP receiving part of the relay UE 720 may deliver the SRAP data PDU, which is received from the lower layer, to the SRAP transmitting part to transmit the same to the source UE 710. The SRAP transmitting part of the relay UE 720 may determine the source UE 710 corresponding to the UE ID in the SRAP header. The UE ID may be substantially the same as the local ID configured in the SRAP of the relay UE 720 in operation(s) 701, 703, and/or 705. If the UE ID is not configured in the SRAP, the relay UE 720 may discard the SRAP data PDU. If the bearer ID included in the SRAP header is 0, 1, 2, or 3, the relay UE 720 may distinguish SL-DRB or SL-SRB based on the PC5 relay RLC channel through which the SRAP data PDU has been received. The relay UE 720 may perform transmission to the source UE 710 through a PC5 relay RLC channel indicated by a specified configuration configured for transmission of an SL-SRB corresponding to the bearer ID of the SRAP header.

According to an embodiment, when the source UE 710 receives the SRAP data PDU transmitted by the relay UE 720, an SRAP receiving part of the source UE 710 may discard the SRAP data PDU if the UE ID included in the header of the SRAP data PDU received from the lower layer is different from the local ID configured in operation 701 and/or operation 703. The SRAP receiving part of the source UE 710 may remove the header of the SRAP data PDU received from the lower layer, and deliver the SRAP SDU to a PDCP of the SL-SRB corresponding to the bearer ID included in the header of the SRAP data PDU. If the bearer ID included in the SRAP header is 0, 1, 2, or 3, the source UE 710 may distinguish SL-DRB or SL-SRB based on the PC5 relay RLC channel through which the SRAP data PDU has been received.

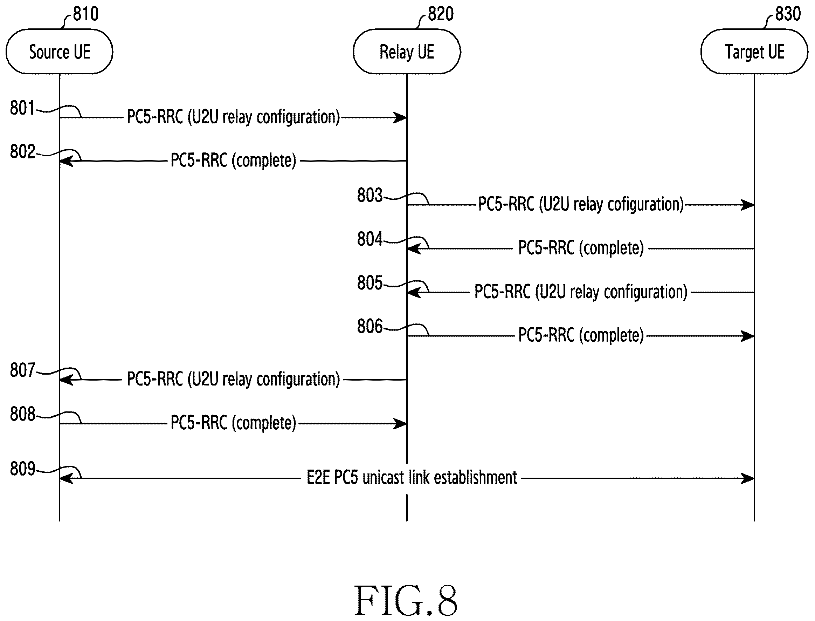

FIG. 8 is a flowchart of a procedure for configuring, with a dedicated configuration, an adaptation layer for relaying an end-to-end sidelink signaling radio bearer (SL-SRB) of a UE-to-UE (U2U) relay according to an embodiment of the disclosure.

Referring to FIG. 8, according to an embodiment, a source UE 810 and a relay UE 820 may have established a PC5 unicast link, and the relay UE 820 may establish a PC5 unicast link to a target UE 830. The establishment of each PC5 unicast link may follow the example of FIG. 5.

In order to receive and transmit an end-to-end SL-SRB message, if at least one of the following conditions is satisfied, the source UE 810 may transmit PC5-RRC signaling to the relay UE 820 and configure SRAP, in operation 801.
Condition 1: When transmission of at least one end-to-end SL-SRB message to be transmitted to the target UE 830 is requested by the upper layer
Condition 2: When a PC5 relay RLC channel for transmission of at least one end-to-end SL-SRB message to be transmitted to the target UE 830 has not been configured
Condition 3: When at least one PC5 relay RLC channel or SRAP for transmission to the target UE 830 has not been configured
Condition 4: When a PC5 unicast link has been established between the source UE 810 and the relay UE 820
Condition 5: When the upper layer has indicated to initiate a U2U relay with the target UE 830

Information that may be included in the information transmitted when PC5-RRC signaling is transmitted to the relay UE 820 may be at least some of examples in [Table 11a]. Additionally, information for configuration between the relay UE 820 and the target UE 830 may also be included, and may be as in the examples in [Table 11a].

**[Table 11a]**

| |
|---|
| - Addition/modification/deletion information for U2U relay |
| - Layer-2 ID of target UE |
| - Local ID used in U2U relay |
| - SL-SRB ID |
| - SL-SRB indicator |
| - PC5 relay RLC channel ID for SL-SRB transmission |
| - PC5 relay RLC channel configuration information between the source UE 810 and the relay UE 820: may be illustrated as in [Table 7] |

According to an embodiment, an SL-SRB for transmitting signaling to exchange end-to-end PC5-S and PC5-RRC messages may correspond to SL-SRB0, SL-SRB1, SL-SRB2, or SL-SRB3. An RLC channel for SL-SRB relay transmission may be determined based on the PC5 relay RLC channel configuration information between the source UE 810 and the relay UE 820, the configuration information being transmitted in operation 801. As an embodiment, when an SL-SRB ID is indicated in operation 801, each SL-SRB may be transmitted through an indicated PC5 relay RLC channel. In this case, a PC5 relay RLC channel through which at least one of SL-SRB0, SL-SRB1, SL-SRB2, or SL-SRB3 is transmitted may be configured. As an embodiment, when an SL-SRB indicator is included in the PC5 relay RLC channel configuration information transmitted in operation 801, SL-SRB0, SL-SRB1, SL-SRB2, and/or SL-SRB3 may be transmitted through a single PC5 relay RLC channel.

According to an embodiment, in case that the relay UE 820 receives an SRAP configuration from the source UE 810 in operation 801, if it is determined that the SRAP configuration has been normally applied, the relay UE 820 may transmit information, which indicates that application of the configuration has been completed, to the source UE 810 via PC5-RRC signaling in operation 802. For example, when the source UE 810 transmits the SRAP configuration in operation 801, or receives SRAP configuration application completion in operation 802, the source UE 810 may determine or identify that the SRAP configuration for end-to-end SL-SRB transmission to the target UE 830 has been completed. For example, when the relay UE 820 receives the SRAP configuration in operation 801, or transmits SRAP configuration application completion in operation 802, the relay UE 820 may determine or identify that the SRAP configuration between the source UE 810 and the relay UE 820 has been completed.

According to an embodiment, in order to receive and transmit an end-to-end SL-SRB message, if at least one of the following conditions is satisfied, the relay UE 820 may transmit PC5-RRC signaling to the target UE 830 and configure SRAP, in operation 803.
Condition 1: When at least one PC5 relay RLC channel or SRAP for transmission from the source UE 810 to the target UE 830 has not been configured
Condition 2: When a PC5 unicast link has been established between the source UE 810 and the relay UE 820
Condition 3: When a PC5 unicast link has been established between the relay UE 820 and the target UE 830
Condition 4: When the source UE 810 has configured SRAP via PC5-RRC signaling in operation 801
Condition 5: When the SRAP configuration between the source UE 810 and the relay UE 820 has been completed
Condition 6: When the upper layer has indicated to initiate a U2U relay between the source UE 810 and the target UE 830

In this case, information that may be included in the SRAP configuration may be some of examples in [Table 12]. For example, the SRAP configuration may include at least one of information elements in [Table 12].

**[Table 12]**

| |
|---|
| - Addition/modification/deletion information for U2U relay |
| - Layer-2 ID of source UE |
| - Local ID used in U2U relay |
| - SL-SRB ID |
| - SL-SRB indicator |
| - PC5 relay RLC channel ID for SL-SRB transmission |
| - PC5 relay RLC channel configuration information between the relay UE 820 and the target UE 830: may be illustrated as in [Table 7] |

The SL-SRB for transmitting signaling to exchange end-to-end PC5-S and PC5-RRC messages may correspond to SL-SRB0, SL-SRB1, SL-SRB2, or SL-SRB3. An RLC channel for SL-SRB relay transmission may be determined based on the PC5 relay RLC channel configuration information between the relay UE 820 and the target UE 830, the configuration information being transmitted in operation 803. As an embodiment, in operation 803, the relay UE 820 may transmit the U2U relay configuration to the target UE 830 via transmission of PC5-RRC signaling.

If the source UE 810 delivers, to the relay UE 820 in operation 801, an SL-SRB ID, an indicator, and/or PC5 relay RLC channel configuration information between the relay UE 820 and the target UE 830, the U2U relay configuration transmitted in operation 803 may be configured to be the same as at least one of the SL-SRB ID, the indicator, or the PC5 relay RLC channel configuration information between the relay UE 820 and the target UE 830, as transmitted in operation 801. A PC5 relay RLC channel ID for transmission of the SL-SRB may be selected by the relay UE 820.

As an embodiment, when an SL-SRB ID is indicated in operation 803, each SL-SRB may be transmitted through an indicated PC5 relay RLC channel. In this case, a PC5 relay RLC channel through which at least one of SL-SRB0, SL-SRB1, SL-SRB2, or SL-SRB3 is transmitted may be configured. As an embodiment, when the SL-SRB indicator is included in the U2U relay configuration in operation 803, SL-SRB0, SL-SRB 1, SL-SRB2, and/or SL-SRB3 may be transmitted through a single PC5 relay RLC channel.

According to an embodiment, when the target UE 830 receives an SRAP configuration from the relay UE 820 in operation 803, if it is determined that the configuration has been normally applied, the target UE 830 may transmit information, which indicates that application of the configuration has been completed, to the relay UE 820 via PC5-RRC signaling in operation 804. For example, when the target UE 830 receives the SRAP configuration in operation 803, or transmits SRAP configuration application completion in operation 804, the target UE 830 may determine that the SRAP configuration for end-to-end SL-SRB transmission has been completed. For example, when the relay UE 820 transmits the SRAP configuration in operation 803, or receives SRAP configuration application completion in operation 804, the relay UE 820 may determine that the SRAP configuration between the target UE 830 and the relay UE 720 has been completed.

According to an embodiment, in order to receive and transmit an end-to-end SL-SRB message, if at least one of the following conditions is satisfied, the target UE 830 may transmit PC5-RRC signaling to the relay UE 820 and configure SRAP, in operation 805.
Condition 1: When transmission of at least one end-to-end SL-SRB message to be transmitted to the source UE 810 is requested by the upper layer
Condition 2: When a PC5 relay RLC channel for transmission of at least one end-to-end SL-SRB message to be transmitted to the source UE 810 has not been configured
Condition 3: When at least one PC5 relay RLC channel or SRAP for transmission to the source UE 810 has not been configured
Condition 4: When a PC5 unicast link has been established between the target UE 830 and the relay UE 820
Condition 5: When the upper layer has indicated to initiate a U2U relay with the source UE 810

Information that may be included in the information transmitted via PC5-RRC signaling in operation 805 may be at least some of examples in [Table 13]. Additionally, information for configuration between the relay UE 820 and the source UE 810 may also be included, and may be as in the examples in [Table 13]. For example, the information transmitted via PC5-RRC signaling may include at least one of information elements in [Table 13]. For example, information for configuration between the relay UE 820 and the source UE 810 may include at least one of the information elements in [Table 13].

**[Table 13]**

| |
|---|
| - Addition/modification/deletion information for U2U relay |
| - Layer-2 ID of source UE |
| - Local ID used in U2U relay |
| - SL-SRB ID |
| - SL-SRB indicator |
| - PC5 relay RLC channel ID for SL-SRB transmission |
| - PC5 relay RLC channel configuration information between the target UE 830 and the relay UE 820: may be illustrated as in [Table 7] |

According to an embodiment, an SL-SRB for transmitting signaling to exchange end-to-end PC5-S and PC5-RRC messages may correspond to SL-SRB0, SL-SRB1, SL-SRB2, or SL-SRB3. An RLC channel for SL-SRB relay transmission may be determined based on the PC5 relay RLC channel configuration information between the target UE 830 and the relay UE 820, the configuration information being transmitted in operation 805. As an embodiment, when an SL-SRB ID is indicated in operation 805, each SL-SRB may be transmitted through an indicated PC5 relay RLC channel. In this case, a PC5 relay RLC channel through which at least one of SL-SRB0, SL-SRB1, SL-SRB2, or SL-SRB3 is transmitted may be configured. As an embodiment, when the SL-SRB indicator is included in the U2U relay configuration in operation 805, SL-SRB0, SL-SRB1, SL-SRB2, and/or SL-SRB3 may be transmitted through a single PC5 relay RLC channel.

According to an embodiment, when the relay UE 820 receives an SRAP configuration from the target UE 830 in operation 805, if it is determined that the configuration has been normally applied, the relay UE 820 may transmit information, which indicates that application of the configuration has been completed, to the target UE 830 via PC5-RRC signaling in operation 806. For example, when the target UE 830 transmits the SRAP configuration in operation 805, or receives SRAP configuration application completion in operation 806, the target UE 830 may determine that the SRAP configuration for end-to-end SL-SRB transmission to the source UE 810 has been completed. For example, when the relay UE 820 receives the SRAP configuration in operation 805, or transmits SRAP configuration application completion in operation 806, the relay UE 820 may determine that the SRAP configuration between the target UE 830 and the relay UE 820 has been completed.

According to an embodiment, in order to receive and transmit an end-to-end SL-SRB message, if at least one of the following conditions is satisfied, the relay UE 820 may transmit PC5-RRC signaling to the source UE 810 and configure SRAP, in operation 807.
Condition 1: When at least one PC5 relay RLC channel or SRAP for transmission from the target UE 830 to the source UE 810 has not been configured
Condition 2: When a PC5 unicast link has been established between the source UE 810 and the relay UE 820
Condition 3: When a PC5 unicast link has been established between the relay UE 820 and the target UE 830
Condition 4: When the target UE 830 has configured SRAP via PC5-RRC signaling in operation 805
Condition 5: When the SRAP configuration between the target UE 830 and the relay UE 820 has been completed
Condition 6: When the upper layer has indicated to initiate a U2U relay between the source UE 810 and the target UE 830

Information that may be included in the SRAP configuration may include at least some of examples in [Table 14]. For example, the information included in the SRAP configuration may include at least one of information elements in [Table 14].

**[Table 14]**

| |
|---|
| - Addition/modification/deletion information for U2U relay |
| - Layer-2 ID of target UE |
| - Local ID used in U2U relay |
| - SL-SRB ID |
| - SL-SRB indicator |
| - PC5 relay RLC channel ID for SL-SRB transmission |
| - PC5 relay RLC channel configuration information between the relay UE 820 and the source UE 810: may be illustrated as in [Table 7] |

According to an embodiment, an SL-SRB for transmitting signaling to exchange end-to-end PC5-S and PC5-RRC messages may correspond to SL-SRB0, SL-SRB1, SL-SRB2, or SL-SRB3. An RLC channel for SL-SRB relay transmission may be determined or identified based on the PC5 relay RLC channel configuration information between the relay UE 820 and the source UE 810, the configuration information being transmitted in operation 807. As an embodiment, in operation 807, the relay UE 820 may transmit the U2U relay configuration to the source UE 810 during PC5-RRC signaling transmission of the relay UE 820.

If the target UE 830 delivers an SL-SRB ID, an indicator, and/or PC5 relay RLC channel configuration information between the relay UE 820 and the source UE 810 in operation 805, the U2U relay configuration transmitted in operation 807 may be configured to be the same as at least one of the SL-SRB ID, the indicator, or the PC5 relay RLC channel configuration information between the relay UE 820 and the source UE 810, as transmitted in operation 805. A PC5 relay RLC channel ID for transmission of the SL-SRB may be selected by the relay UE 820.

As an embodiment, when an SL-SRB ID is indicated in operation 807, each SL-SRB may be transmitted through an indicated PC5 relay RLC channel. In this case, a PC5 relay RLC channel through which at least one of SL-SRB0, SL-SRB1, SL-SRB2, or SL-SRB3 is transmitted may be configured. As an embodiment, in operation 807, when the SL-SRB indicator is included, SL-SRB0, SL-SRB1, SL-SRB2, and/or SL-SRB3 may be transmitted through a single PC5 relay RLC channel.

According to an embodiment, when the source UE 810 receives an SRAP configuration from the relay UE 820 in operation 807, if it is determined that the configuration has been normally applied, the source UE 810 may transmit information, which indicates that application of the configuration has been completed, to the relay UE 820 via PC5-RRC signaling in operation 808. For example, when the source UE 810 receives the SRAP configuration in operation 807, or transmits SRAP configuration application completion in operation 808, the source UE 810 may determine that the SRAP configuration for end-to-end SL-SRB transmission has been completed. For example, when the relay UE 820 transmits the SRAP configuration in operation 807, or receives SRAP configuration application completion in operation 808, the relay UE 820 may determine that the SRAP configuration between the source UE 810 and the relay UE 720 has been completed.

According to an embodiment, the source UE 810 may initiate establishment of the end-to-end PC5 unicast link to the target UE 830 in operation 809.

According to an embodiment, an SRAP transmitting part of the source UE 810 may determine a UE ID corresponding to the target UE 830 in order to transmit, to the target UE 830, an SRAP SDU received from the upper layer. The UE ID may be substantially the same as the local ID configured in the SRAP of the source UE 810 in operation 801 and/or operation 807. The SRAP of the source UE 810 may determine a bearer ID based on the SL-SRB identity received from the upper layer. The SRAP transmitting part of the source UE 810 may generate an SRAP data PDU by combining the SRAP SDU with an SRAP header including the determined UE ID and bearer ID. The source UE 810 may transmit the generated SRAP data PDU to the relay UE 820 via the PC5 relay RLC channel configured to transmit the SRAP data PDU via SL-SRB.

According to an embodiment, when the relay UE 820 receives the SRAP data PDU transmitted by the source UE 810, an SRAP receiving part of the relay UE 820 may deliver the SRAP data PDU, which is received from the lower layer, to an SRAP transmitting part to transmit the same to the target UE 830. The SRAP transmitting part of the relay UE 820 may determine the target UE 830 corresponding to the UE ID in the SRAP header. The UE ID may be substantially the same as the local ID configured in the SRAP of the relay UE 820 in operation(s) 801, 803, 805, and/or 807. If the UE ID is not configured in the SRAP, the relay UE 820 may discard the SRAP data PDU. If the bearer ID included in the SRAP header is 0, 1, 2, or 3, the relay UE 820 may distinguish SL-DRB or SL-SRB based on the PC5 relay RLC channel through which the SRAP data PDU has been received. The relay UE 820 may perform transmission to the target UE 830 through the PC5 relay RLC channel configured to transmit the SL-SRB corresponding to the bearer ID of the SRAP header.

According to an embodiment, when the target UE 830 receives the SRAP data PDU transmitted by the relay UE 820, an SRAP receiving part of the target UE 830 may discard the SRAP data PDU if the UE ID included in the header of the SRAP data PDU received from the lower layer is different from the local ID configured in operation 803 and/or operation 805. The SRAP receiving part of the target UE 830 may remove the header of the SRAP data PDU received from the lower layer, and deliver the SRAP SDU to a PDCP of the SL-SRB corresponding to the bearer ID included in the header of the SRAP data PDU. If the bearer ID included in the SRAP header is 0, 1, 2, or 3, the target UE 830 may distinguish SL-DRB or SL-SRB based on the PC5 relay RLC channel through which the SRAP data PDU has been received.

According to an embodiment, an SRAP transmitting part of the target UE 830 may determine a UE ID corresponding to the source UE 810 in order to transmit, to the source UE 810, an SRAP SDU received from the upper layer. The UE ID may be substantially the same as the local ID configured in the SRAP of the target UE 830 in operation 803 and/or operation 805. The SRAP of the target UE 830 may determine a bearer ID based on the SL-SRB identity received from the upper layer. The SRAP transmitting part of the target UE 830 may generate an SRAP data PDU by combining the SRAP SDU with an SRAP header including the determined UE ID and bearer ID. The target UE 830 may transmit the generated SRAP data PDU to the relay UE 820 via the PC5 relay RLC channel configured to transmit the SRAP data PDU via SL-SRB.

According to an embodiment, when the relay UE 820 receives the SRAP data PDU transmitted by the target UE 830, the SRAP receiving part of the relay UE 820 may deliver the SRAP data PDU, which is received from the lower layer, to the SRAP transmitting part to transmit the same to the source UE 810. The SRAP transmitting part of the relay UE 820 may determine the source UE 810 corresponding to the UE ID in the SRAP header. The UE ID may be substantially the same as the local ID configured in the SRAP of the relay UE 820 in operation(s) 801, 803, 805, and/or 807. If the UE ID is not configured in the SRAP, the relay UE 820 may discard the SRAP data PDU. If the bearer ID included in the SRAP header is 0, 1, 2, or 3, the relay UE 820 may distinguish SL-DRB or SL-SRB based on the PC5 relay RLC channel through which the SRAP data PDU has been received. The relay UE 820 may perform transmission to the source UE 810 through the PC5 relay RLC channel configured to transmit the SL-SRB corresponding to the bearer ID of the SRAP header.

According to an embodiment, when the source UE 810 receives the SRAP data PDU transmitted by the relay UE 820, an SRAP receiving part of the source UE 810 may discard the SRAP data PDU if the UE ID included in the header of the SRAP data PDU received from the lower layer is different from the local ID configured in operation 801 or 807. The SRAP receiving part of the source UE 810 may remove the header of the SRAP data PDU received from the lower layer, and deliver the SRAP SDU to a PDCP of the SL-SRB corresponding to the bearer ID included in the header of the SRAP data PDU. If the bearer ID included in the SRAP header is 0, 1, 2, or 3, the source UE 810 may distinguish SL-DRB or SL-SRB based on the PC5 relay RLC channel through which the SRAP data PDU has been received.

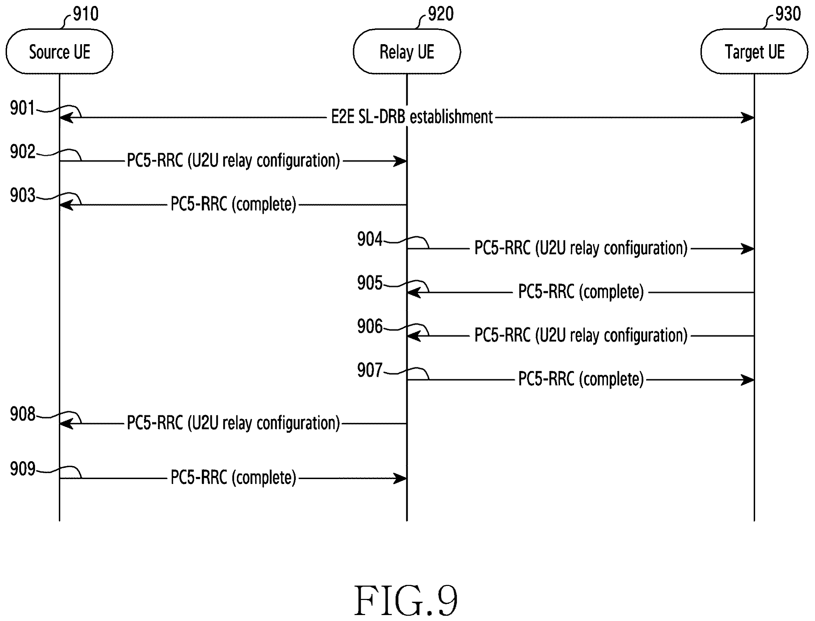

FIG. 9 is a flowchart of a procedure for establishing an end-to-end (E2E) sidelink data radio bearer (SL-DRB) of a UE-to-UE (U2U) relay and configuring an adaptation layer for relaying the sidelink data radio bearer according to an embodiment of the disclosure.

Referring to FIG. 9, according to an embodiment, a source UE 910 and a relay UE 920 may have established a PC5 unicast link, and the relay UE 920 and a target UE 930 may have established a PC5 unicast link. The establishment of each PC5 unicast link may follow the example of FIG. 5. The source UE 910 and the target UE 930 may have established an end-to-end PC5 unicast link. The establishment of the end-to-end PC5 unicast link may follow the example of FIG. 7 or FIG. 8.

According to an embodiment, the source UE 910 or the target UE 930 may acquire configuration information on an end-to-end SL-DRB, and an acquisition method may be as in the example of [Table 2]. If the source UE 910 or the target UE 930 is serving as a transmission (Tx) UE, the source UE 910 or the target UE 930 may acquire configuration information on an SL-DRB for a QoS flow corresponding to data to be transmitted based on one of the three methods of [Table 2], and the source UE 910 or the target UE 930 may deliver the SL-DRB configuration information for the QoS flow, via PC5-RRC signaling in operation 901, to the target UE 930 or the source UE 910 corresponding to a reception (Rx) UE. The SL-DRB configuration information to be applied when the reception UE receives the QoS flow of data may be determined by the reception UE itself. The SL-DRB configuration information that may be included in PC5-RRC signaling may be illustrated as in [Table 15].

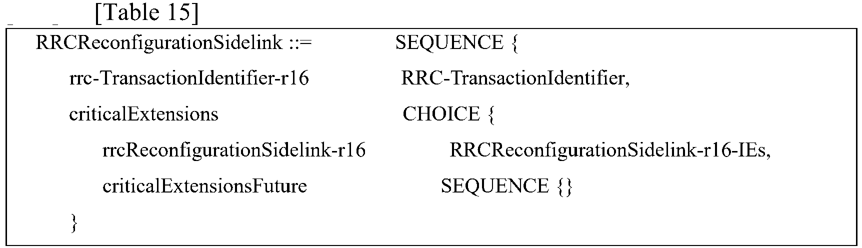

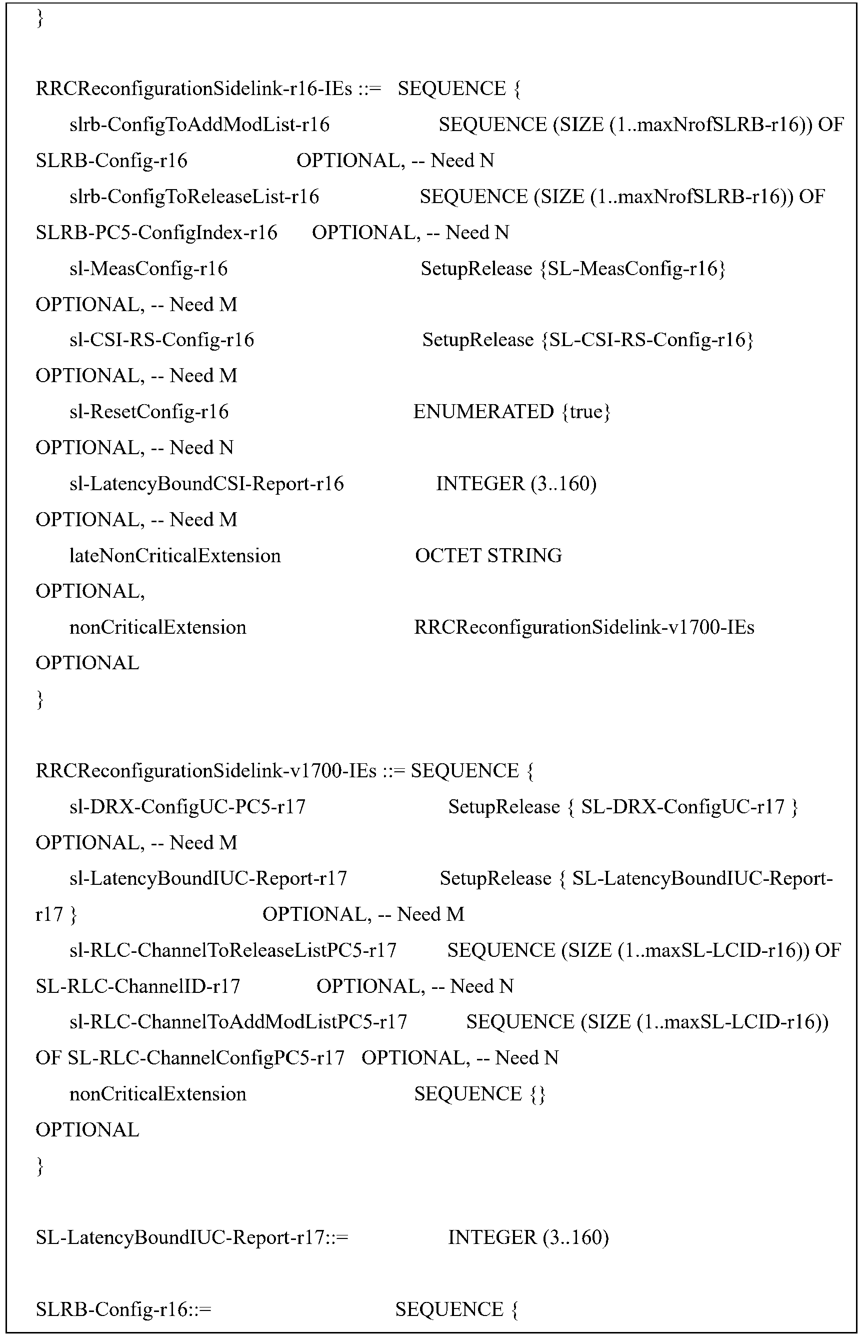

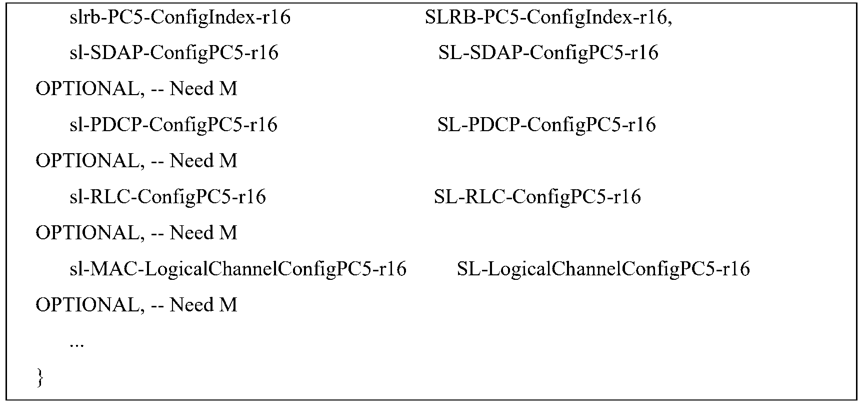

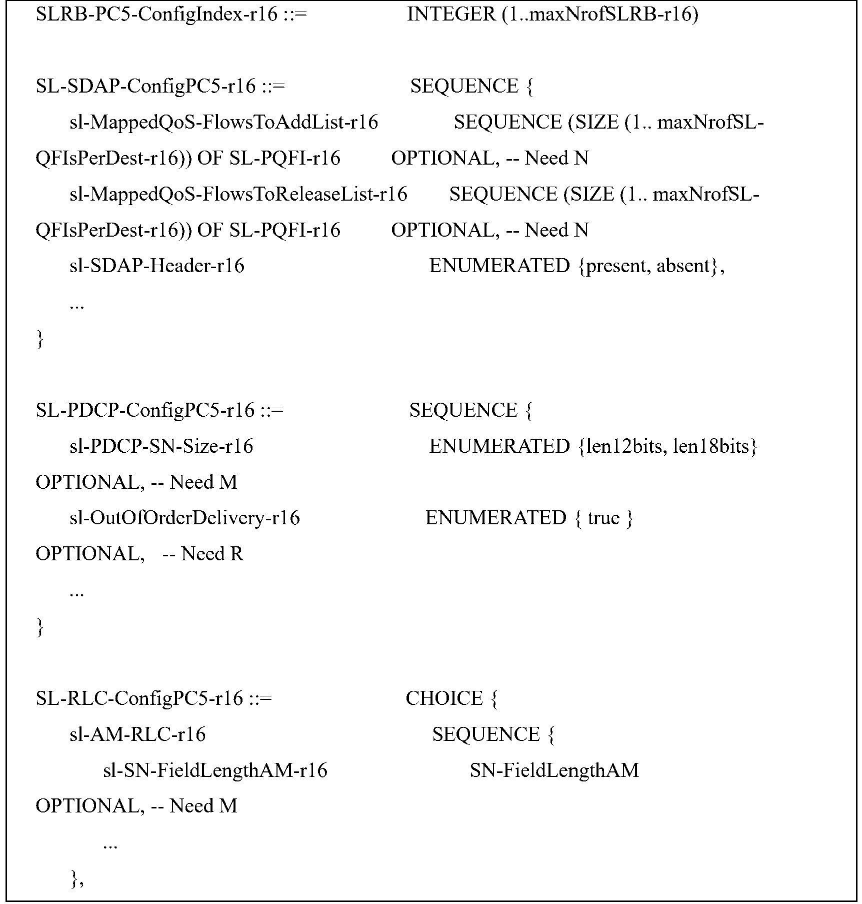

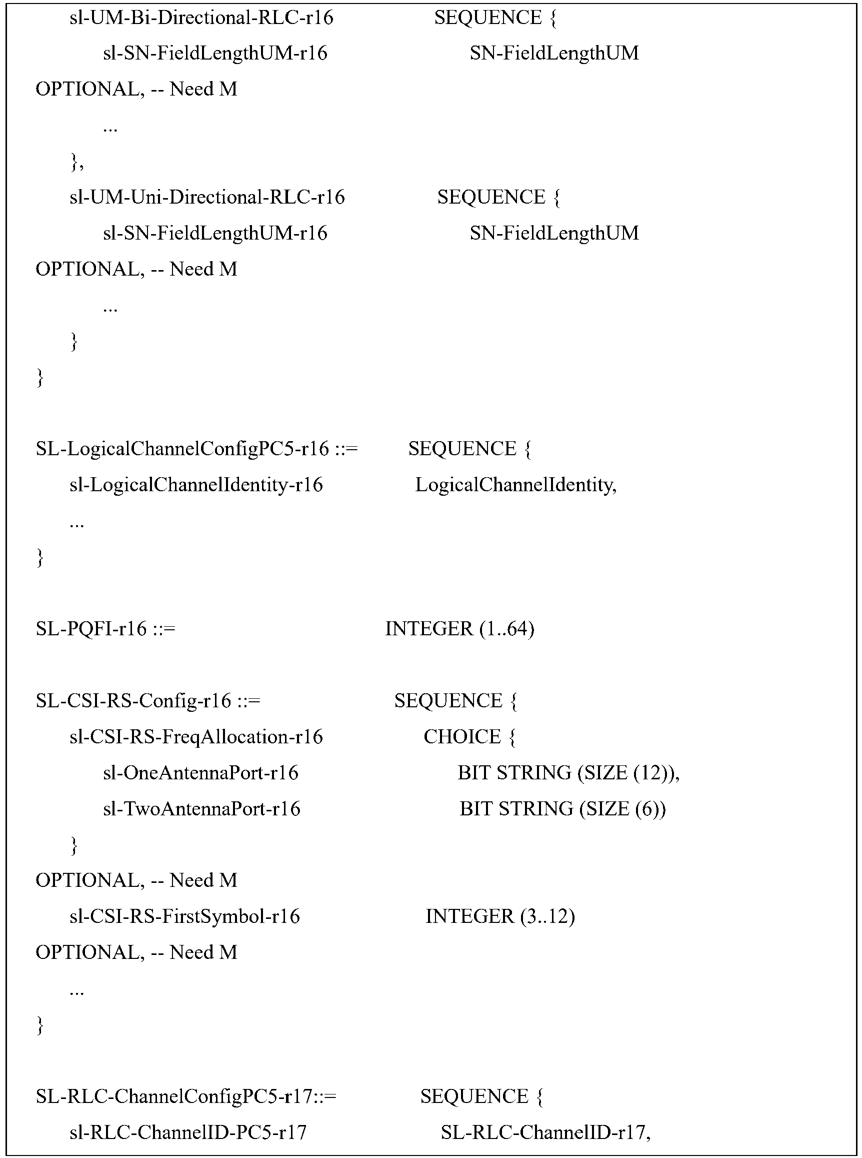

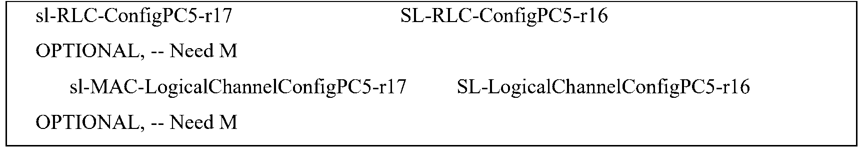

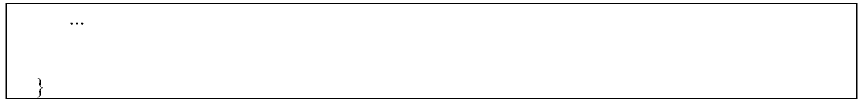

As an embodiment, except for the MAC configuration and the PC5 RLC channel configuration for end-to-end SL-DRB transmission in [Table 15], only SDAP and PDCP configurations for SLRB may be transmitted.

According to an embodiment, in operation 901, in case that the source UE 910 or the target UE 930 is serving as a reception UE, if it is determined that a configuration of PC5-RRC signaling delivered for end-to-end SL-DRB establishment has been normally applied, the source UE 910 or the target UE 930 may transmit configuration application completion information via PC5-RRC signaling to the target UE 930 or the source UE 910 that is serving as a transmission UE. For example, in case that the source UE 910 or the target UE 930 is serving as a transmission UE, when completion of applying an end-to-end SL-DRB configuration is received via PC5-RRC signaling, it may be determined that establishment of the end-to-end SL-DRB has been completed. For example, in case that the source UE 910 or the target UE 930 is serving as a reception UE, when an SL-DRB configuration has been received via PC5-RRC signaling, and the configuration of the signaling has been normally applied, it may be determined that establishment of the end-to-end SL-DRB has been completed.

According to an embodiment, in order to receive and transmit an end-to-end SL-DRB message, if at least one of the following conditions is satisfied, the source UE 910 may transmit PC5-RRC signaling to the relay UE 920 and configure SRAP, in operation 902.
Condition 1: When at least one end-to-end SL-DRB to be transmitted to the target UE 930 has been established
Condition 2: When a PC5 relay RLC channel for end-to-end SL-DRB transmission, established between the source UE 910 and the target UE 930, has not been configured
Condition 3: When SRAP or at least one PC5 relay RLC channel for end-to-end SL-DRB transmission, established between the source UE 910 and the target UE 930, has not been configured

Information that may be included in the information transmitted via PC5-RRC signaling in operation 920 may be at least some of examples in [Table 16]. Additionally, information for configuration between the relay UE 920 and the target UE 930 may also be included, and at least one of information elements in [Table 16] may be included.

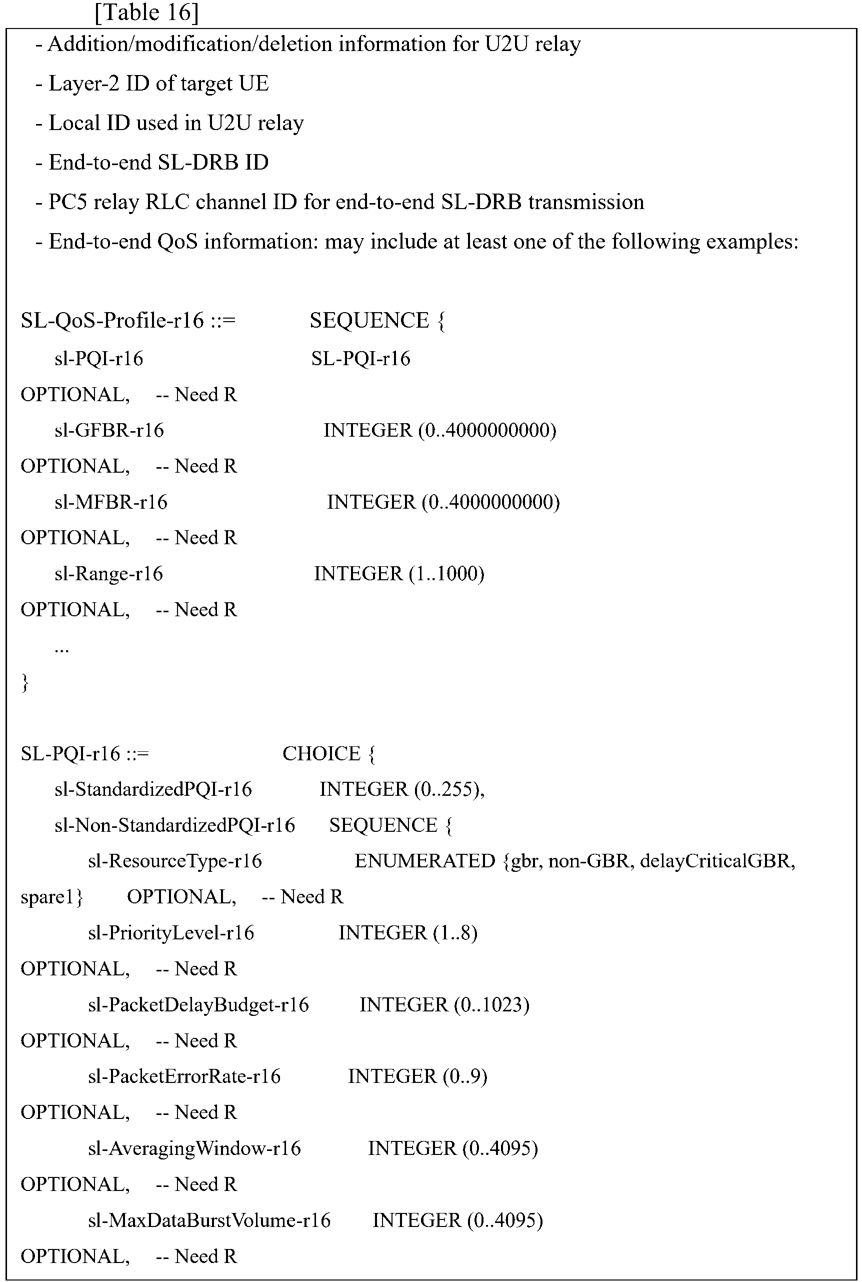

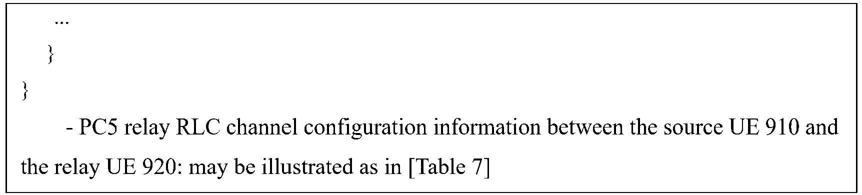

According to an embodiment, an RLC channel for end-to-end SL-DRB relay transmission may be determined or identified based on the PC5 relay RLC channel configuration information between the source UE 910 and the relay UE 920, the configuration information being transmitted in operation 902. As an embodiment, when an SL-DRB ID is indicated in operation 902, an indicated SL-DRB may be transmitted through an indicated PC5 relay RLC channel. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may be determined or identified based on the example of FIG. 7 or FIG. 8.

According to an embodiment, when the relay UE 920 receives an SRAP configuration from the source UE 910 in operation 902, if it is determined that the configuration has been normally applied, the relay UE 720 may transmit information, which indicates that application of the configuration has been completed, to the source UE 910 via PC5-RRC signaling in operation 903. For example, when the source UE 910 transmits the SRAP configuration in operation 902, or receives SRAP configuration application completion in operation 903, the source UE 910 may determine that the SRAP configuration for end-to-end SL-DRB with the target UE 930 has been completed. For example, when the relay UE 920 receives the SRAP configuration in operation 902, or transmits SRAP configuration application completion in operation 903, the relay UE 920 may determine that the SRAP configuration between the source UE 910 and the relay UE 820 has been completed.

According to an embodiment, in order to receive and transmit an end-to-end SL-DRB message, if at least one of the following conditions is satisfied, the relay UE 920 may transmit PC5-RRC signaling to the target UE 930 and configure SRAP, in operation 904.
Condition 1: When the source UE 910 has configured SRAP via PC5-RRC signaling in operation 902
Condition 2: When the SRAP configuration between the source UE 910 and the relay UE 920 has been completed
In this case, information that may be included in the SRAP configuration may be some of examples in [Table 17].

**[Table 17]**

| |
|---|
| - Addition/modification/deletion information for U2U relay |
| - Layer-2 ID of source UE |
| - Local ID used in U2U relay |
| - SL-DRB ID |
| - PC5 relay RLC channel ID for SL-DRB transmission |
| - PC5 relay RLC channel configuration information between the relay UE 920 and the target UE 930: may be illustrated as in [Table 7] |

According to an embodiment, an RLC channel for end-to-end SL-DRB relay transmission may be determined or identified based on the PC5 relay RLC channel configuration information between the relay UE 920 and the target UE 930, the configuration information being transmitted in operation 904. As an embodiment, when an SL-DRB ID is indicated in operation 904, an indicated SL-DRB may be transmitted through an indicated PC5 relay RLC channel. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may follow the example of FIG. 7 or FIG. 8.

As an embodiment, the relay UE 920 may transmit a U2U relay configuration to the target UE 930 in operation 904, during transmission of PC5-RRC signaling by the relay UE 920.

If the source UE 910 delivers information for configuration between the relay UE 920 and the target UE 930 in operation 902, the U2U relay configuration delivered in operation 904 may be configured to be the same as at least one of information elements (e.g., an SL-SRB ID, an indicator, or PC5 relay RLC channel configuration information between the UE 920 and the source UE 910) included in the information delivered in operation 902. A PC5 relay RLC channel ID for SL-DRB transmission may be selected by the relay UE 920. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may follow the example of FIG. 7 or FIG. 8.

According to an embodiment, when the target UE 930 receives an SRAP configuration from the relay UE 920 in operation 904, if it is determined that the configuration has been normally applied, the target UE 930 may transmit information, which indicates that application of the configuration has been completed, to the relay UE 920 via PC5-RRC signaling in operation 905. For example, when the target UE 930 receives the SRAP configuration in operation 904, or transmits SRAP configuration application completion in operation 905, the target UE 930 may determine that the SRAP configuration for end-to-end SL-DRB has been completed. For example, when the relay UE 920 transmits the SRAP configuration in operation 904, or receives SRAP configuration application completion in operation 905, the relay UE 920 may determine that the SRAP configuration between the target UE 930 and the relay UE 720 has been completed.

According to an embodiment, in order to receive and transmit an end-to-end SL-DRB message, if at least one of the following conditions is satisfied, the target UE 930 may transmit PC5-RRC signaling to the relay UE 920 and configure SRAP, in operation 906.
Condition 1: When at least one end-to-end SL-DRB to be transmitted to the source UE 910 has been established
Condition 2: When a PC5 relay RLC channel for end-to-end SL-DRB transmission, established between the source UE 910 and the target UE 930, has not been configured
Condition 3: When SRAP or at least one PC5 relay RLC channel for end-to-end SL-DRB transmission, established between the source UE 910 and the target UE 930, has not been configured

Information that may be included in information transmitted via PC5-RRC signaling may be at least some of examples in [Table 18]. Additionally, information for configuration between the relay UE 920 and the source UE 910 may also be included, and at least one of information elements in [Table 18] may be included.

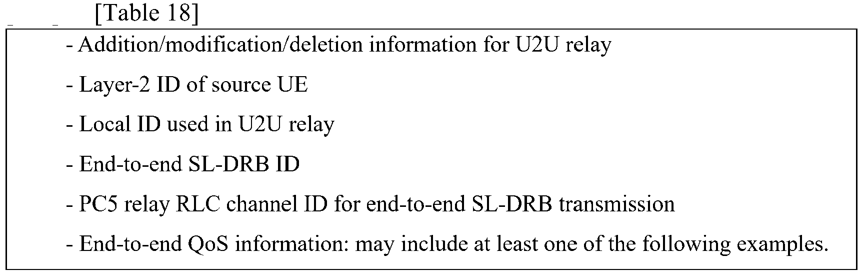

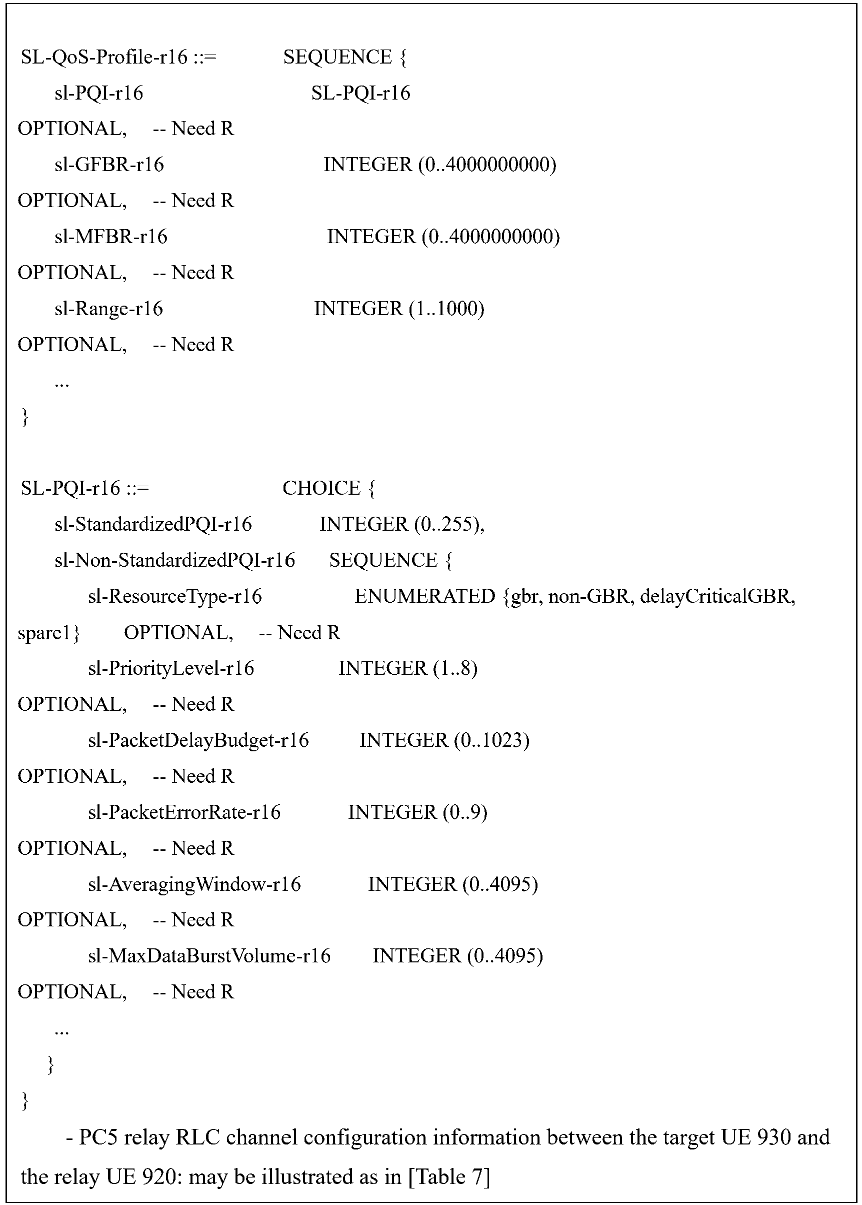

According to an embodiment, an RLC channel for end-to-end SL-DRB relay transmission may be determined or identified based on the PC5 relay RLC channel configuration information between the target UE 930 and the relay UE 920, the configuration information being transmitted in operation 906. As an embodiment, when an SL-DRB ID is indicated in operation 906, an indicated SL-DRB may be transmitted through an indicated PC5 relay RLC channel. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may follow the example of FIG. 7 or FIG. 8.

According to an embodiment, when the relay UE 920 receives an SRAP configuration from the target UE 930 in operation 906, if it is determined that the configuration has been normally applied, the relay UE 820 may transmit information, which indicates that application of the configuration has been completed, to the target UE 930 via PC5-RRC signaling in operation 907. For example, when the target UE 930 transmits the SRAP configuration in operation 906, or receives SRAP configuration application completion in operation 907, the target UE 930 may determine that the SRAP configuration for end-to-end SL-DRB with the source UE 910 has been completed. For example, when the relay UE 920 receives the SRAP configuration in operation 906, or transmits SRAP configuration application completion in operation 907, the relay UE 920 may determine that the SRAP configuration between the target UE 930 and the relay UE 820 has been completed.

According to an embodiment, in order to receive and transmit an end-to-end SL-DRB message, if at least one of the following conditions is satisfied, the relay UE 920 may transmit PC5-RRC signaling to the source UE 910 and configure SRAP, in operation 908.
Condition 1: When the target UE 930 has configured SRAP via PC5-RRC signaling in operation 906
Condition 2: When the SRAP configuration between the target UE 930 and the relay UE 920 has been completed

Information that may be included in the SRAP configuration may include at least some of examples in [Table 19].

**[Table 19]**

| |
|---|
| - Addition/modification/deletion information for U2U relay |
| - Layer-2 ID of target UE |
| - Local ID used in U2U relay |
| - SL-DRB ID |
| - PC5 relay RLC channel ID for SL-DRB transmission |
| - PC5 relay RLC channel configuration information between the relay UE 920 and the source UE 910: may be illustrated as in [Table 7] |

According to an embodiment, an RLC channel for end-to-end SL-DRB relay transmission may be determined or identified based on the PC5 relay RLC channel configuration information between the relay UE 920 and the source UE 910, the configuration information being transmitted in operation 908. As an embodiment, when an SL-DRB ID is indicated in operation 908, an indicated SL-DRB may be transmitted through an indicated PC5 relay RLC channel. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may follow the example of FIG. 7 or FIG. 8.

As an embodiment, the relay UE 920 may transmit a U2U relay configuration to the source UE 910 in operation 908, during transmission of PC5-RRC signaling by the relay UE 920.

If the target UE 930 delivers information (e.g., U2U relay configuration) for configuration between the relay UE 920 and the source UE 910 in operation 906, at least one piece of information included in the configuration information transmitted in operation 906 may be configured to be substantially the same as the U2U relay configuration transmitted in operation 908. A PC5 relay RLC channel ID for SL-DRB transmission may be selected by the relay UE 920. In this case, if the end-to-end SL-DRB ID is 1, 2, 3, or 4, a PC5 relay RLC channel for end-to-end SL-DRB transmission and a PC5 relay RLC channel for end-to-end SL-SRB transmission may be different. A configuration of the PC5 relay RLC channel for end-to-end SL-SRB transmission may follow the example of FIG. 7 or FIG. 8.

According to an embodiment, when the source UE 910 receives an SRAP configuration from the relay UE 920 in operation 908, if it is determined that the configuration has been normally applied, the source UE 910 may transmit information, which indicates that application of the configuration has been completed, to the relay UE 920 via PC5-RRC signaling in operation 909. For example, when the source UE 910 receives the SRAP configuration in operation 908, or transmits SRAP configuration application completion in operation 909, the source UE 910 may determine that the SRAP configuration for end-to-end SL-DRB has been completed. For example, when the relay UE 920 transmits the SRAP configuration in operation 908, or receives SRAP configuration application completion in operation 909, the relay UE 920 may determine that the SRAP configuration between the source UE 910 and the relay UE 920 has been completed.

According to an embodiment, an SRAP transmitting part of the source UE 910 may determine a UE ID corresponding to the target UE 930 in order to transmit, to the target UE 930, an SRAP SDU received from the upper layer. The UE ID may be substantially the same as the local ID configured in the SRAP of the source UE 910 in operation 902 and/or operation 908. The SRAP of the source UE 910 may determine a bearer ID to be an end-to-end SL-DRB identity received from the upper layer or a value one less than the end-to-end SL-DRB identity. The SRAP transmitting part of the source UE 910 may generate an SRAP data PDU by combining the SRAP SDU with an SRAP header including the determined UE ID and bearer ID. The source UE 910 may transmit the generated SRAP data PDU to the relay UE 920 via the PC5 relay RLC channel configured to transmit the end-to-end SL-DRB.

According to an embodiment, when the relay UE 920 receives the SRAP data PDU transmitted by the source UE 910, an SRAP receiving part of the relay UE 920 may deliver the SRAP data PDU, which is received from the lower layer, to an SRAP transmitting part to transmit the same to the target UE 930. The SRAP transmitting part of the relay UE 920 may determine the target UE 930 corresponding to the UE ID in the SRAP header. The UE ID may be substantially the same as the local ID configured in the SRAP of the relay UE 820 in operation(s) 902, 904, 906, and/or 908. If the UE ID is not configured in the SRAP, the relay UE 920 may discard the SRAP data PDU. If the bearer ID included in the SRAP header is 0, 1, 2, or 3, the relay UE 920 may distinguish SL-DRB or SL-SRB based on the PC5 relay RLC channel through which the SRAP data PDU has been received. The relay UE 920 may perform transmission to the target UE 930 through the PC5 relay RLC channel configured to transmit the end-to-end SL-DRB corresponding to the bearer ID of the SRAP header.

According to an embodiment, when the target UE 930 receives the SRAP data PDU transmitted by the relay UE 920, an SRAP receiving part of the target UE 930 may discard the SRAP data PDU if the UE ID included in the header of the SRAP data PDU received from the lower layer is different from the local ID configured in operation 904 and/or operation 906. The SRAP receiving part of the target UE 930 may remove the header of the SRAP data PDU received from the lower layer, and deliver the SRAP SDU to a PDCP of the end-to-end SL-DRB corresponding to the bearer ID included in the header of the SRAP data PDU or a value greater than the bearer ID by 1. If the bearer ID included in the SRAP header is 0, 1, 2, or 3, the target UE 930 may distinguish SL-DRB or SL-SRB based on the PC5 relay RLC channel through which the SRAP data PDU has been received.

According to an embodiment, an SRAP transmitting part of the target UE 930 may determine a UE ID corresponding to the source UE 910 in order to transmit, to the source UE 910, an SRAP SDU received from the upper layer. The UE ID may be substantially the same as the local ID configured in the SRAP of the target UE 930 in operation 904 or 906. The SRAP of the target UE 930 may determine a bearer ID to be an end-to-end SL-DRB identity received from the upper layer or a value one less than the end-to-end SL-DRB identity. The SRAP transmitting part of the target UE 930 may generate an SRAP data PDU by combining the SRAP SDU with an SRAP header including the determined UE ID and bearer ID. The target UE 930 may transmit the generated SRAP data PDU to the relay UE 920 via the PC5 relay RLC channel configured to transmit the end-to-end SL-DRB.

According to an embodiment, when the relay UE 920 receives the SRAP data PDU transmitted by the target UE 930, the SRAP receiving part of the relay UE 920 may deliver the SRAP data PDU, which is received from the lower layer, to the SRAP transmitting part to transmit the same to the source UE 910. The SRAP transmitting part of the relay UE 920 may determine the source UE 910 corresponding to the UE ID in the SRAP header. The UE ID may be substantially the same as the local ID configured in the SRAP of the relay UE 920 in operation(s) 902, 904, 906, and/or 908. If the UE ID is not configured in the SRAP, the relay UE 920 may discard the SRAP data PDU. If the bearer ID included in the SRAP header is 0, 1, 2, or 3, the relay UE 920 may distinguish SL-DRB or SL-SRB based on the PC5 relay RLC channel through which the SRAP data PDU has been received. The relay UE 920 may perform transmission to the source UE 910 through the PC5 relay RLC channel configured to transmit the end-to-end SL-DRB corresponding to the bearer ID of the SRAP header.

According to an embodiment, when the source UE 910 receives the SRAP data PDU transmitted by the relay UE 920, an SRAP receiving part of the source UE 910 may discard the SRAP data PDU if the UE ID included in the header of the SRAP data PDU received from the lower layer is different from the local ID configured in operation 902 and/or operation 908. The SRAP receiving part of the source UE 910 may remove the header of the SRAP data PDU received from the lower layer, and deliver the SRAP SDU to a PDCP of the end-to-end SL-DRB corresponding to the bearer ID included in the header of the SRAP data PDU or a value greater than the bearer ID by 1. If the bearer ID included in the SRAP header is 0, 1, 2, or 3, the source UE 910 may distinguish SL-DRB or SL-SRB based on the PC5 relay RLC channel through which the SRAP data PDU has been received.

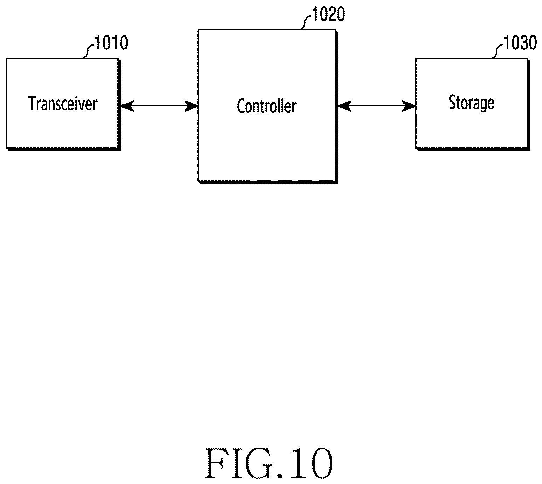

FIG. 10 is a block diagram illustrating an internal structure of a base station according to an embodiment of the disclosure.

Referring to FIG. 10, the base station may include a transceiver 1010, a controller 1020, and/or a storage 1030. The transceiver 1010, the controller 1020, and/or the storage 1030 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 1010 and the controller 1020. Furthermore, the transceiver 1010, the controller 1020, and/or the storage 1030 may be implemented in the form of a single chip.

The base station of the disclosure may correspond to the base station 130 in FIG. 1, the base station 230 in FIG. 2, and/or the base station 330 in FIG. 3.

The transceiver 1010 refers to a base station receiver and a base station transmitter as a whole, and may transmit/receive signals with UEs, other base stations, and other network devices. The transmitted/received signals may include control information and data. The transceiver 1010 may transmit, for example, system information, synchronization signals, or reference signals to the UE. To this end, the transceiver 1010 may include an RF transmitter configured to up-convert and amplify the frequency of transmitted signals, an RF receiver configured to low-noise-amplify received signals and down-convert the frequency thereof, and the like. However, this is only an embodiment of the transceiver 1010, and the components of the transceiver 1010 are not limited to the RF transmitter and the RF receiver. The transceiver 1010 may include wired/wireless transceivers, and may various components for transmitting/receiving signals. In addition, the transceiver 1010 may receive signals through a communication channel (e.g., a radio channel), output the same to the controller 1020, and transmit signals output from the controller 1020 through the communication channel. Furthermore, the transceiver 1010 may receive communication signals, output same to a processor, and transmit signals output from the processor to UEs, other base stations, or other network entities through a wired/wireless network.

The storage 1030 may store programs and data necessary for operations of the base station. In addition, the storage 1030 may store control information or data included in signals acquired by the base station. The storage 1030 may include storage media such as a ROM, a RAM, a hard disk, a CD-ROM, and a DVD, or a combination of storage media. In addition, the storage 1030 may store at least one of information transmitted/received through the transceiver 1010 and information generated through the controller 1020.

As used herein, the controller 1020 may be defined as a circuit, an application specific integrated circuit, or at least one processor. The processor may include a communication processor (CP) which performs control for communication and an application processor (AP) which controls upper layers such as application programs. The controller 1020 may control the overall operation of the base station according to the embodiments proposed in the disclosure. For example, the controller 1020 may control signal flows between the respective blocks to perform operations according to the above-described flowcharts.

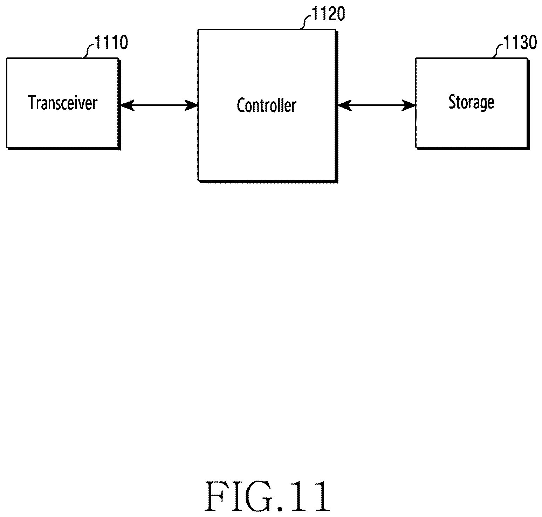

FIG. 11 is a block diagram illustrating a structure of a UE according to an embodiment of the disclosure.

Referring to FIG. 11, the UE may include a transceiver 1110, a controller 1120, and a storage 1130. The transceiver 1110, the controller 1120, and the storage 1130 may be operated according to the above-described communication methods of the UE. However, components of the UE are not limited to the above-described example. For example, the UE may include a larger or smaller number of components than the above-described components. For example, the UE may include the transceiver 1110 and the controller 1120. Furthermore, the transceiver 1110, the controller 1120, and the storage 1130 may be implemented in the form of a single chip.

The UE of the disclosure in FIG. 11 may correspond to the remote UE 210 in FIG. 1 to FIG. 12, a relay UE (e.g., the relay UE 220 in FIG. 2), a source UE (e.g., the source UE 410 in FIG. 4), or a target UE (e.g., the target UE 430 in FIG. 4).

The transceiver 1110 refers to a UE receiver and a UE transmitter as a whole, and may transmit/receive signals with base stations, other UEs, and other network entities. The signals transmitted/received with the base stations may include control information and data. The transceiver 1110 may receive, for example, system information, synchronization signals, or reference signals from the base station. To this end, the transceiver 1110 may include an RF transmitter configured to up-convert and amplify the frequency of transmitted signals, an RF receiver configured to low-noise-amplify received signals and down-convert the frequency thereof, and the like. However, this is only an embodiment of the transceiver 1110, and the components of the transceiver 1110 are not limited to the RF transmitter and the RF receiver. Also, the transceiver 1110 may include wired/wireless transceivers, and may various components for transmitting/receiving signals. addition, the transceiver 1110 may receive signals through a radio channel, output the same to the controller 1120, and transmit signals output from the controller 1120 through the radio channel. Furthermore, the transceiver 1110 may receive communication signals, output same to a processor, and transmit signals output from the processor to a network entity through a wired/wireless network.

The storage 1130 may store programs and data necessary for operations of the UE. In addition, the storage 1130 may store control information or data included in signals acquired by the UE. The storage 1130 may include storage media such as a ROM, a RAM, a hard disk, a CD-ROM, and a DVD, or a combination of storage media.

As used herein, the controller 1120 may be defined as a circuit, an application specific integrated circuit, or at least one processor. The processor may include a communication processor (CP) which performs control for communication and an application processor (AP) which controls upper layers such as application programs. The controller 1120 may control the overall operation of the UE according to the embodiments proposed in the disclosure. For example, the controller 1120 may control signal flows between the respective blocks to perform operations according to the above-described flowcharts.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a relay user equipment (UE) for UE-to-UE (U2U) sidelink communication in a wireless communication system, the method comprising:
acquiring configuration information on a sidelink relay adaption protocol (SRAP); and
receiving, from a first UE, an SRAP protocol data unit (PDU) by using at least one of a plurality of sidelink signaling radio bearers (SL SRBs) based on the configuration information,
wherein the SRAP PDU is received by the relay UE using a radio link control (RLC) channel common to the plurality of SL SRBs.

2. The method of claim 1, wherein each of the plurality of SL SRBs has a specified bearer ID,
wherein the RLC channel corresponds to a logical channel identity (LCID) specified for the U2U sidelink communication, and
wherein the method comprises:
based on a first bearer ID included in a header of the SRAP PDU received through the RLC channel, identifying that the SRAP PDU has been received through a first SL SRB corresponding to the first bearer ID among the plurality of SL SRBs.

3. The method of claim 1, further comprising:
receiving, from the first UE, information on an SL data radio bearer (DRB) for the relay UE,
wherein the information on the SL DRB comprises at least one of a layer 2 (L2) identity (ID) of a second UE performing the U2U sidelink communication with the first UE or end-to-end (E2E) quality of service (QoS) information for the SL DRB, and
wherein the E2E QoS information comprises information on a packet delay budget (PDB).

4. The method of claim 1, further comprising:
receiving, from the first UE, an end-to-end (E2E) message for an SL data radio bearer (DRB); and
transmitting the E2E message for the SL DRB to a second UE performing the U2U sidelink communication with the first UE,
wherein the E2E message for the SL DRB comprises at least one of a layer 2 (L2) identity (ID) of the first UE, a local ID of the relay UE, an SL DRB ID, an RLC channel ID for the SL DRB, or RLC channel configuration information between the relay UE and the second UE, and
wherein, in case that the first UE is in one of a radio resource control (RRC) idle state, an RRC inactive state, and an out-of-coverage (OOC) state, information on the SL DRB is based on preconfigured information or a system information block (SIB).

5. A relay user equipment (UE) for UE-to-UE (U2U) sidelink communication in a wireless communication system, the relay UE comprising:
a transceiver; and
a controller coupled with the transceiver,
wherein the controller is configured to:
acquire configuration information on a sidelink relay adaption protocol (SRAP); and
receive, from a first UE, an SRAP protocol data unit (PDU) by using at least one of a plurality of sidelink signaling radio bearers (SL SRBs) based on the configuration information, and
wherein the SRAP PDU is received by the relay UE using a radio link control (RLC) channel common to the plurality of SL SRBs.

6. The relay UE of claim 5, wherein each of the plurality of SL SRBs has a specified bearer ID,
wherein the RLC channel corresponds to a logical channel identity (LCID) specified for the U2U sidelink communication, and
wherein the controller is configured to, based on a first bearer ID included in a header of the SRAP PDU received through the RLC channel, identify that the SRAP PDU has been received through a first SL SRB corresponding to the first bearer ID among the plurality of SL SRBs.

7. The relay UE of claim 5, wherein the controller is configured to receive, from the first UE, information on an SL data radio bearer (DRB) for the relay UE,
wherein the information on the SL DRB comprises at least one of a layer 2 (L2) identity (ID) of a second UE performing the U2U sidelink communication with the first UE or end-to-end (E2E) quality of service (QoS) information for the SL DRB, and
wherein the E2E QoS information comprises information on a packet delay budget (PDB).

8. The relay UE of claim 5, wherein the controller is configured to:
receive, from the first UE, an end-to-end (E2E) message for an SL data radio bearer (DRB); and
transmit the E2E message for the SL DRB to a second UE performing the U2U sidelink communication with the first UE,
wherein the E2E message for the SL DRB comprises at least one of a layer 2 (L2) identity (ID) of the first UE, a local ID of the relay UE, an SL DRB ID, an RLC channel ID for the SL DRB, or RLC channel configuration information between the relay UE and the second UE, and
wherein, in case that the first UE is in one of a radio resource control (RRC) idle state, an RRC inactive state, and an out-of-coverage (OOC) state, information on the SL DRB is based on preconfigured information or a system information block (SIB).

9. A method performed by a first user equipment (UE) in a wireless communication system, the method comprising:
acquiring configuration information on a sidelink relay adaption protocol (SRAP); and
transmitting, to a relay UE for UE-to-UE (U2U) sidelink communication, an SRAP protocol data unit (PDU) by using at least one of a plurality of sidelink signaling radio bearers (SL SRBs) based on the configuration information,
wherein the SRAP PDU is transmitted to the relay UE using a radio link control (RLC) channel common to the plurality of SL SRBs.

10. The method of claim 9, wherein each of the plurality of SL SRBs has a specified bearer ID,
wherein the RLC channel corresponds to a logical channel identity (LCID) specified for the U2U sidelink communication, and
wherein a first bearer ID corresponding to a first SL SRB among the plurality of SL SRBs is included in a header of the SRAP PDU.

11. The method of claim 9, comprising transmitting, to the relay UE, information on an SL data radio bearer (DRB) for the relay UE,
wherein the information on the SL DRB comprises at least one of a layer 2 (L2) identity (ID) of a second UE performing the U2U sidelink communication with the first UE or end-to-end (E2E) quality of service (QoS) information for the SL DRB, and
wherein the E2E QoS information comprises information on a packet delay budget (PDB).

12. The method of claim 9, further comprising:
transmitting, to the relay UE, an end-to-end (E2E) message for an SL data radio bearer (DRB),
wherein the E2E message for the SL DRB comprises at least one of a layer 2 (L2) identity (ID) of the first UE, a local ID of the relay UE, an SL DRB ID, an RLC channel ID for the SL DRB, or RLC channel configuration information between the relay UE and a second UE performing the U2U sidelink communication with the first UE, and
wherein, in case that the first UE is in one of a radio resource control (RRC) idle state, an RRC inactive state, and an out-of-coverage (OOC) state, information on the SL DRB is based on preconfigured information or a system information block (SIB).

13. A first user equipment (UE) in a wireless communication system, the first UE comprising:
a transceiver; and
a controller coupled with the transceiver,
wherein the controller is configured to:
acquire configuration information on a sidelink relay adaption protocol (SRAP); and
transmit, to a relay UE for UE-to-UE (U2U) sidelink communication, an SRAP protocol data unit (PDU) by using at least one of a plurality of sidelink signaling radio bearers (SL SRBs) based on the configuration information, and
wherein the SRAP PDU is transmitted to the relay UE using a radio link control (RLC) channel common to the plurality of SL SRBs.

14. The first UE of claim 13, wherein the controller is configured to transmit, to the relay UE, information on an SL data radio bearer (DRB) for the relay UE,
wherein the information on the SL DRB comprises at least one of a layer 2 (L2) identity (ID) of a second UE performing the U2U sidelink communication with the first UE or end-to-end (E2E) quality of service (QoS) information for the SL DRB, and
wherein the E2E QoS information comprises information on a packet delay budget (PDB).

15. The first UE of claim 13, wherein the controller is configured to transmit, to the relay UE, an end-to-end (E2E) message for an SL data radio bearer (DRB),
wherein the E2E message for the SL DRB comprises at least one of a layer 2 (L2) identity (ID) of the first UE, a local ID of the relay UE, an SL DRB ID, an RLC channel ID for the SL DRB, or RLC channel configuration information between the relay UE and a second UE performing the U2U sidelink communication with the first UE, and
wherein, in case that the first UE is in one of a radio resource control (RRC) idle state, an RRC inactive state, and an out-of-coverage (OOC) state, information on the SL DRB is based on preconfigured information or a system information block (SIB).
